(19)

**Europäisches Patentamt**
**European Patent Office**
**Office européen des brevets**

(11) **EP 4 443 396 A1**

(12) **EUROPEAN PATENT APPLICATION**
published in accordance with Art. 153(4) EPC

(43) Date of publication:
**09.10.2024 Bulletin 2024/41**

(21) Application number: **23806742.5**

(22) Date of filing: **06.05.2023**

(51) International Patent Classification (IPC):
*G06V 10/70* (2022.01)          *G06N 20/00* (2019.01)
*G06V 10/762* (2022.01)          *G06V 10/74* (2022.01)
*G06V 10/46* (2022.01)          *G06V 10/34* (2022.01)
*G06F 16/535* (2019.01)          *G06F 16/583* (2019.01)

(52) Cooperative Patent Classification (CPC):
**G06V 10/761; G06F 16/583; G06F 18/23;**
**G06T 7/0012; G06V 10/44; G06V 10/762;**
**G06V 10/82;** G06V 2201/03

(86) International application number:
**PCT/CN2023/092516**

(87) International publication number:
**WO 2023/221790 (23.11.2023 Gazette 2023/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.05.2022  CN 202210531185**

(71) Applicant: **Tencent Technology (Shenzhen)**
**Company Limited**
**Shenzhen, Guangdong 518057 (CN)**

(72) Inventors:
• YANG, Sen
  **Shenzhen, Guangdong 518057 (CN)**
• XIANG, Jinxi
  **Shenzhen, Guangdong 518057 (CN)**
• ZHANG, Jun
  **Shenzhen, Guangdong 518057 (CN)**
• HAN, Xiao
  **Shenzhen, Guangdong 518057 (CN)**

(74) Representative: **EP&C**
**P.O. Box 3241**
**2280 GE Rijswijk (NL)**

(54) **IMAGE ENCODER TRAINING METHOD AND APPARATUS, DEVICE, AND MEDIUM**

(57)     An image encoder training method and apparatus, a device, and a medium, which relate to the field of artificial intelligence. The method comprises: acquiring a first sample tissue image (401); performing first data enhancement and second data enhancement on the first sample tissue image, respectively, and obtaining a first image and a second image; inputting the first image into a first image encoder, and obtaining a first feature vector(402); inputting the second image into a second image encoder, and obtaining a second feature vector (403); clustering first feature vectors respectively corresponding to different first sample tissue images, and obtaining a plurality of first clustering centers (404); determining a positive sample vector and a negative sample vector from the plurality of first clustering centers; on the basis of the second feature vector, the positive sample vector and the negative sample vector, generating a first group loss function(409); and on the basis of the first group loss function, training the first image encoder and the second image encoder(410).

FIG. 2

**Description**

RELATED APPLICATION

The application claims priority to China Patent Application No. 202210531185.3, filed on May 16, 2022 and entitled "IMAGE ENCODER TRAINING METHOD AND APPARATUS, DEVICE, AND MEDIUM".

FIELD OF THE TECHNOLOGY

This disclosure relates to the field of artificial intelligence, and in particular, to an image encoder training method and apparatus, a device, and a medium.

BACKGROUND OF THE DISCLOSURE

In the medical field, there is a scenario in which whole slide images (WSIs) are searched for similar WSIs. Each WSI (a large image) includes a huge number of histopathological images (small images).
In a related technology, an entire large image is represented with a most representative small image in the large image, according to a feature vector of the small image, a database is then searched for a target small image most similar thereto, and a large image corresponding to the target small image is taken as a final search result. In the above process, a feature vector of the small image needs to be extracted by using an image encoder. In the related technology, during training, the image encoder is trained by contrast learning. The contrast learning is intended to learn common features of an anchor image and positive samples and distinguish different features between the anchor image and negative samples (generally referred to as zoom in on the anchor image and the positive samples and zoom out the anchor image and the negative samples).
In the related technology, when the image encoder is trained by the contrast learning, for an image X, an image X1 and an image X2 obtained by respectively performing data enhancement on the image X twice are taken as a pair of positive samples. In the related technology, the positive samples may be defined too broadly, and there may be a big difference in how similar the image X1 and the image X2 are to the anchor image. An encoding effect of the image encoder trained by using the related technology will be limited by a broad assumption of the positive samples. As a result, feature extraction is performed on the image by using the image encoder trained with the broadly assumed positive samples, which may make the extracted image features less accurate and is not conducive to downstream search tasks.

SUMMARY

This disclosure provides an image encoder training method and apparatus, a device, and a medium, which can improve precision of image features extracted by an image encoder. The technical solutions are as follows:
According to one aspect of this disclosure, an image encoder training method is provided, including:

acquiring a first sample tissue image;

performing first data enhancement on the first sample tissue image to obtain a first image; inputting the first image into a first image encoder to obtain a first feature vector, the first feature vector being a contrast vector for contrast learning;

performing second data enhancement on the first sample tissue image to obtain a second image, an enhancement parameter corresponding to the first data enhancement and an enhancement parameter corresponding to the second data enhancement being different, the enhancement parameter including at least one of an enhancement manner and enhancement intensity; inputting the second image into a second image encoder to obtain a second feature vector, the second feature vector being an anchor vector for the contrast learning;

clustering first feature vectors respectively corresponding to different first sample tissue images to obtain a plurality of first clustering centers; determining the first feature vector in the plurality of first clustering centers that has a maximum similarity value with the second feature vector to be a positive sample vector in a plurality of first feature vectors; determining the first feature vectors in the plurality of first feature vectors other than the positive sample vector to be negative sample vectors in the plurality of first feature vectors;

generating a first subfunction based on the second feature vector and the positive sample vector in the plurality of first feature vectors; generating a second subfunction based on the second feature vector and the negative sample vectors in the plurality of first feature vectors; generating a first group loss function based on the first subfunction and the second subfunction; and

training the first image encoder and the second image encoder by using the first group loss function; and determining the trained second image encoder to be a final image encoder obtained by training.

According to another aspect of this disclosure, a WSI search method is provided, including:

acquiring a WSI, and acquiring a plurality of tissue images obtained by cropping the WSI;

inputting the plurality of tissue images into an image encoder to obtain image feature vectors respectively corresponding to the plurality of tissue images;

clustering the image feature vectors respectively corresponding to the plurality of tissue images, and determining at least one key image from the image feature vectors respectively corresponding to the plurality of tissue images;

querying, based on image feature vectors respectively corresponding to the at least one key image, a database for at least one candidate image package respectively corresponding to the at least one key image, the candidate image package including at least one candidate tissue image;

determining target image package from the at least one candidate image package according to attributes of the at least one candidate image package; and

determining WSIs, to which at least one candidate tissue image included in the target image package respectively belongs, to be search results.

According to another aspect of this disclosure, an image encoder training apparatus is provided, including:

an acquisition module configured to acquire a first sample tissue image;

a processing module configured to perform first data enhancement on the first sample tissue image to obtain a first image; and input the first image into a first image encoder to obtain a first feature vector, the first feature vector being a contrast vector for contrast learning;

the processing module being further configured to perform second data enhancement on the first sample tissue image to obtain a second image, an enhancement parameter corresponding to the first data enhancement and an enhancement parameter corresponding to the second data enhancement being different; and input the second image into a second image encoder to obtain a second feature vector, the second feature vector being an anchor vector for the contrast learning;

a determination module configured to determine the first feature vector to be a contrast vector for the contrast learning, and determine the second feature vector to be an anchor vector for the contrast learning;

a clustering module configured to cluster first feature vectors respectively corresponding to different first sample tissue images to obtain a plurality of first clustering centers; determine the first feature vector in the plurality of first clustering centers that has a maximum similarity value with the second feature vector to be a positive sample vector in a plurality of first feature vectors; and determine the first feature vectors in the plurality of first feature vectors other than the positive sample vector to be negative sample vectors in the plurality of first feature vectors;

a generation module configured to generate a first subfunction based on the second feature vector and the positive sample vector in the plurality of first feature vectors; generate a second subfunction based on the second feature vector and the negative sample vectors in the plurality of first feature vectors; and generate a first group loss function based on the first subfunction and the second subfunction; and

a training module configured to train the first image encoder and the second image encoder by using the first group loss function; and determine the trained second image encoder to be an image encoder obtained by training.

According to another aspect of this disclosure, a WSI search apparatus is provided, including:

an acquisition module configured to acquire a WSI, and acquire a plurality of tissue images obtained by cropping the WSI;

a generation module configured to input the plurality of tissue images into an image encoder to obtain image feature vectors respectively corresponding to the plurality of tissue images;

a clustering module configured to cluster the image feature vectors respectively corresponding to the plurality of tissue images, and determine at least one key image from the image feature vectors respectively corresponding to the plurality of tissue images;

a query module configured to query, based on image feature vectors respectively corresponding to the at least one key image, a database for at least one candidate image package respectively corresponding to the at least one key image, the candidate image package including at least one candidate tissue image;

a selecting module configured to determine target image package from the at least one candidate image package according to attributes of the at least one candidate image package; and

a determination module configured to determine WSIs, to which at least one candidate tissue image included in the target image package respectively belongs, to be search results.

According to another aspect of this disclosure, a computer device is provided, including: a processor and a memory, the memory storing a computer program, and the computer program being loaded and executed by the processor to implement the image encoder training method or the WSI search method as described above.

According to another aspect of this disclosure, a computer-readable storage medium is provided, storing a computer program, and the computer program being loaded and executed by a processor to implement the image encoder training method or the WSI search method as described above.

According to another aspect of this disclosure, a computer program product or a computer program is provided. The computer program product or the computer program includes a computer instruction. The computer instruction is stored in a computer-readable storage medium. A processor of a computer device reads the computer instruction from the computer-readable storage medium. The processor executes the computer instruction, causing the computer device to perform the image encoder training method or the WSI search method as described above.

The technical solutions provided in the embodiments of this disclosure have at least the following beneficial effects:

By further distinguishing the positive samples identified in the related technology, "positive degrees" of the positive samples are further distinguished, so that a loss function used in contrast learning (also called a contrast learning paradigm) can more accurately zoom in on the anchor image and the positive samples, thereby better training the image encoder, and the trained image encoder can better learn common features between the anchor image and the positive samples. Therefore, accuracy of image features extracted by the image encoder is improved, thereby improving accuracy of downstream search tasks.

BRIEF DESCRIPTION OF THE DRAWINGS

FIG. 1 is a schematic diagram of a related introduction to contrast learning according to an embodiment of this disclosure.

FIG. 2 is a schematic diagram of a computer system according to an embodiment of this disclosure.

FIG. 3 is a schematic diagram of training architecture of an image encoder according to an embodiment of this disclosure.

FIG. 4 is a flowchart of an image encoder training method according to an embodiment of this disclosure.

FIG. 5 is a schematic diagram of training architecture of an image encoder according to another embodiment of this disclosure.

FIG. 6 is a schematic diagram of training architecture of an image encoder according to another embodiment of this disclosure.

FIG. 7 is a flowchart of an image encoder training method according to another embodiment of this disclosure.

FIG. 8 is a schematic diagram of training architecture of an image encoder according to another embodiment of this disclosure.

FIG. 9 is a flowchart of an image encoder training method according to another embodiment of this disclosure.

FIG. 10 is a schematic diagram of training architecture of an image encoder according to another embodiment of this disclosure.

FIG. 11 is a schematic diagram of training architecture of an image encoder according to another embodiment of this disclosure.

FIG. 12 is a flowchart of an image encoder training method according to another embodiment of this disclosure.

FIG. 13 is a schematic diagram of training architecture of an image encoder according to another embodiment of this disclosure.

FIG. 14 is a flowchart of a WSI search method according to an embodiment of this disclosure.

FIG. 15 is a schematic diagram of construction architecture of a database according to an embodiment of this disclosure.

FIG. 16 is a structural block diagram of an image encoder training apparatus according to an embodiment of this disclosure.

FIG. 17 is a structural block diagram of a WSI search apparatus according to an embodiment of this disclosure.

FIG. 18 is a structural block diagram of a computer device according to an embodiment of this disclosure.

DESCRIPTION OF EMBODIMENTS

First, terms involved in embodiments of this disclosure are briefly introduced.

A WSI is a visual digital image created by using a digital scanner to scan a traditional pathological film to collect high-resolution images and then using a computer to seamlessly stitch collected fragmented images. The WSI may realize zooming in and zooming out at any scale, mobile browsing in any direction, and so on by using specific software. Generally, a data volume of a WSI ranges from several hundred megabytes (MB) to even several gigabytes (GB). In this disclosure, the WSI is generally referred to as a large image. In a related technology, processing of the WSI focuses on selection and analysis of local tissue regions in the WSI. In this disclosure, the local tissue regions in the WSI are generally referred to as small images.

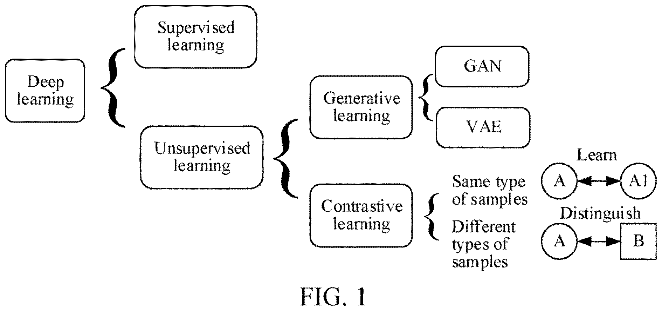

Contrastive learning (also called contrast learning): Referring to FIG. 1, deep learning may be divided into supervised learning and unsupervised learning according to whether data is marked. The supervised learning requires marking massive data, while the unsupervised learning allows autonomous discovery of underlying structures in the data. The unsupervised learning may be further divided into generative learning and contrastive learning. The generative learning is represented by a method such as an autoencoder (such as GAN and VAE), in which data is generated from data so as to be similar to training data as a whole or in terms of high-level semantics. For example, a plurality of horse images in a training set learn features of horses through a generative model, and then new horse images may be generated.

The contrastive learning focuses on learning common features between a same type of samples and distinguishing different features between different types of samples. In the contrast learning, an encoder is generally trained through a sample triple (an anchor image, a negative sample, and a positive sample). As shown in FIG. 1, a circle A is an anchor image in the contrast learning, a circle A1 is a positive sample in the contrast learning, and a square B is a negative sample in the contrast learning. The contrast learning is intended to use a trained encoder to zoom in on a distance between the circle A and the circle A1 and to zoom out on a distance between the circle A and the square B. That is, the trained encoder supports similar encoding of a same type of data and makes encoding results of different types of data as different as possible. In this disclosure, a method for training an image encoder by contrast learning will be introduced.

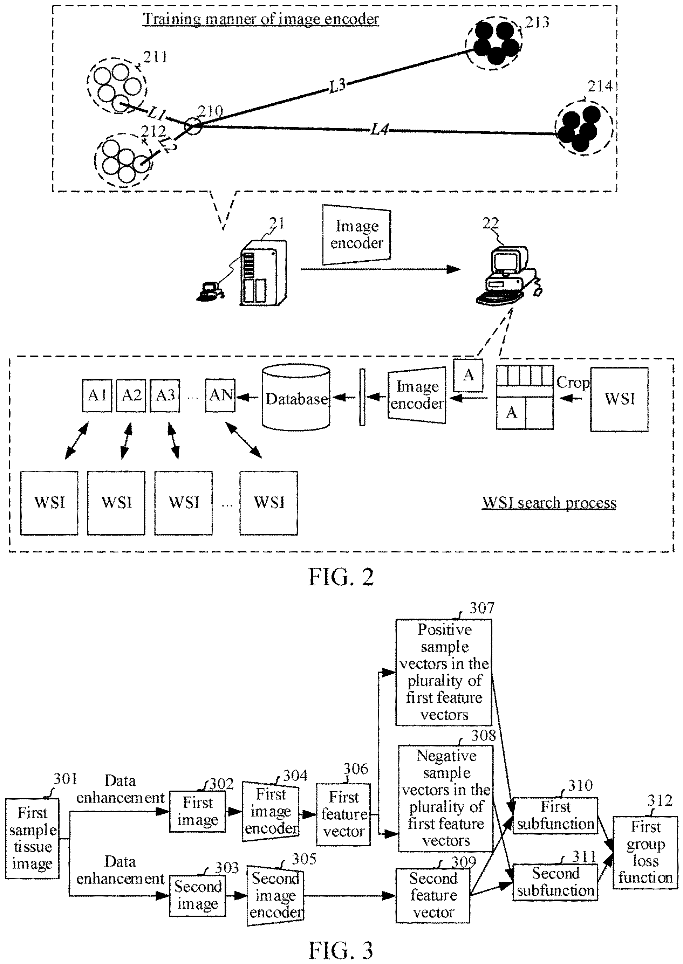

Next, an implementation environment of this disclosure is introduced. FIG. 2 is a schematic diagram of a computer system according to an exemplary embodiment. As shown in FIG. 2, an image encoder training device 21 is configured to train an image encoder, the image encoder training device 21 then transmits the image encoder to an image encoder using device 22, and the image encoder using device 22 uses the image encoder to search for a WSI.

**At an image encoder training stage,** as shown in FIG. 2, the image encoder is trained by contrast learning, and a distance between an anchor image 210 and positive samples is smaller than that between the anchor image 210 and negative samples. In FIG. 2, the positive samples include a positive sample class cluster 211 and a positive sample class cluster 212 obtained by clustering, the negative samples include a negative sample class cluster 213 and a negative sample class cluster 214 obtained by clustering, a distance between a clustering center of the positive sample class cluster 211 and the anchor image 210 is L1, a distance between a clustering center of the positive sample class cluster 212 and the anchor image 210 is L2, a distance between a clustering center of the negative sample class cluster 213 and the anchor image 210 is L3, and a distance between a clustering center of the negative sample class cluster 214 and the anchor image 210 is L4.

In this disclosure, after a plurality of positive samples are clustered, a plurality of positive sample class clusters are obtained, a distance between a clustering center of the class cluster most similar to the anchor image and the anchor image is set to L2, and distances between other positive samples in the plurality of positive samples and the anchor image are set to L1 (Note: L2 shown in FIG. 2 is only the distance between the clustering center of the positive sample class cluster 212 and the anchor image, and distances between other positive samples of the positive sample class cluster 212 and the anchor image are L1). According to redefined distances between respective positive samples and the anchor image, the anchor image and the plurality of positive samples are zoomed in on. In the related technology, it is considered that distances between all the positive samples and the anchor image are the same. In this disclosure, after a plurality of negative samples are clustered, a plurality of negative sample class clusters are obtained, a weight is assigned to each class cluster based on a similarity between a clustering center of the class cluster and the anchor image, and the anchor image and the negative samples are zoomed out on according to the weights of the class clusters. The distance L3 and the distance L4 shown in FIG. 2 are weighted distances. In the related technology, it is considered that distances between all the negative samples and the anchor image are the same.

**In an image encoder using stage,** as shown in FIG. 2, the image encoder using stage in this disclosure is a WSI search process. Firstly, a WSI is cropped into a plurality of tissue images (small images). Then, the plurality of tissue images are clustered to obtain at least one key image, and the at least one key image is jointly used for representing a WSI. Next, for one key image (a small image A), the small image A is inputted into an image encoder to obtain an image feature vector of the small image A. Finally, a database is queried according to the image feature vector of the small image A to obtain a small image A1 to a small image AN, WSIs corresponding to the small image A1 to the small image AN are taken as search results, and the at least one key image is used as a query image to determine the WSI from the database.

In some embodiments, the image encoder training device 21 and the image encoder using device 22 above may be computer devices with machine learning capabilities. For example, the computer devices may be terminals or servers. In some embodiments, the image encoder training device 21 and the image encoder using device 22 above may be a same computer device, or the image encoder training device 21 and the image encoder using device 22 may be different computer devices. Moreover, when the image encoder training device 21 and the image encoder using device 22 are different devices, the image encoder training device 21 and the image encoder using device 22 may be a same type of devices. For example, the image encoder training device 21 and the image encoder using device 22 may both be servers. Alternatively, the image encoder training device 21 and the image encoder using device 22 may be different types of devices. The above server may be a stand-alone physical server, may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The above terminal may be a smartphone, a vehicle-mounted terminal, a smart TV, a wearable device, a tablet computer, a notebook computer, a desktop computer, a smart speaker, a smartwatch, or the like, but is not limited thereto. The terminal and the server may be connected directly or indirectly by wired or wireless communication, which is not limited in this disclosure.

**A detailed introduction will be provided below in the following order.**

  **Image encoder training stage -- 1;**

    -  **Related content of zooming in on anchor image and positive sample -- 1-1;**

      -  **Related content of first group loss function -- 1-1-1;**

- **Related content of second group loss function -- 1-1-2;**

- **Related content of zooming out on anchor image and positive sample -- 1-2;**

- **Related content of first weight loss function -- 1-2-1;**

- **Related content of second weight loss function -- 1-2-2;**

- **Related content of complete loss function -- 1-3;**

**Image encoder using stage (WSI search process) -- 2.**

**Related content of first group loss function -- 1-1-1:**

FIG. 3 shows a training framework of an image encoder according to an exemplary embodiment. For example, the framework is applied to the image encoder training device 21 shown in FIG. 1.

As shown in FIG. 3, a first image 302 is obtained by data enhancement on a first sample tissue image 301, the first image 302 passes through a first image encoder 304 to obtain a first feature vector 306 corresponding to the first image 302, and when a plurality of first sample tissue images 301 are inputted at the same time, a plurality of first feature vectors will be distinguished into positive sample vectors 307 in the plurality of first feature vectors and negative sample vectors 308 in the plurality of first feature vectors; a second image 303 is obtained by data enhancement on the first sample tissue image 301, and the second image 303 passes through a second image encoder 305 to obtain a second feature vector 309; a first subfunction 310 is generated based on the positive sample vectors 307 in the plurality of first feature vectors and the second feature vector 309; a second subfunction 311 is generated based on the negative sample vectors 308 in the plurality of first feature vectors and the second feature vector 309; and a first group loss function 312 is constructed based on the first subfunction 310 and the second subfunction 311. The first group loss function 312 is used for zooming in on a distance between an anchor image and a positive sample.

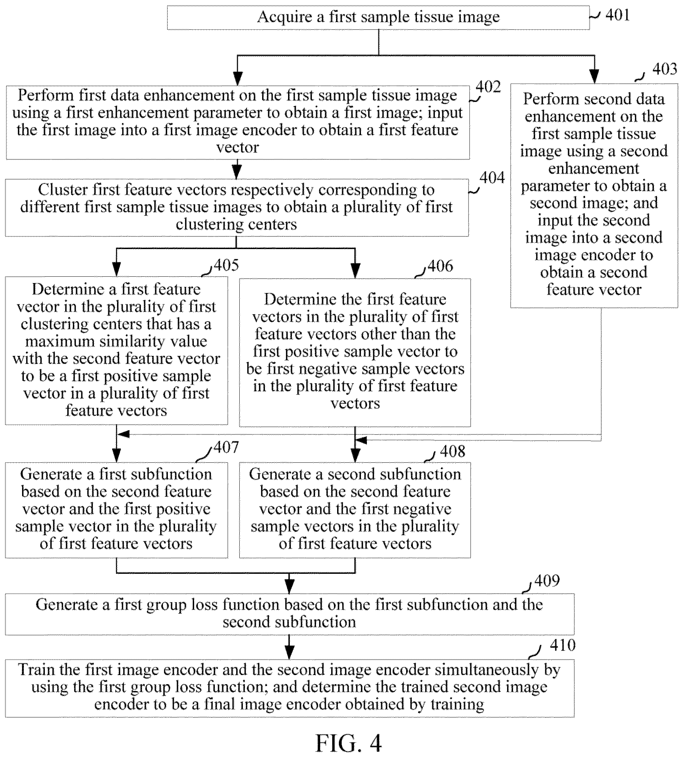

FIG. 4 is a flowchart of an image encoder training method according to an exemplary embodiment. For example, the method is applied to the training framework of the image encoder shown in FIG. 3. The method is performed by the image encoder training device in the above training framework. The method includes the following steps.

**Step 401:** Acquire a first sample tissue image.

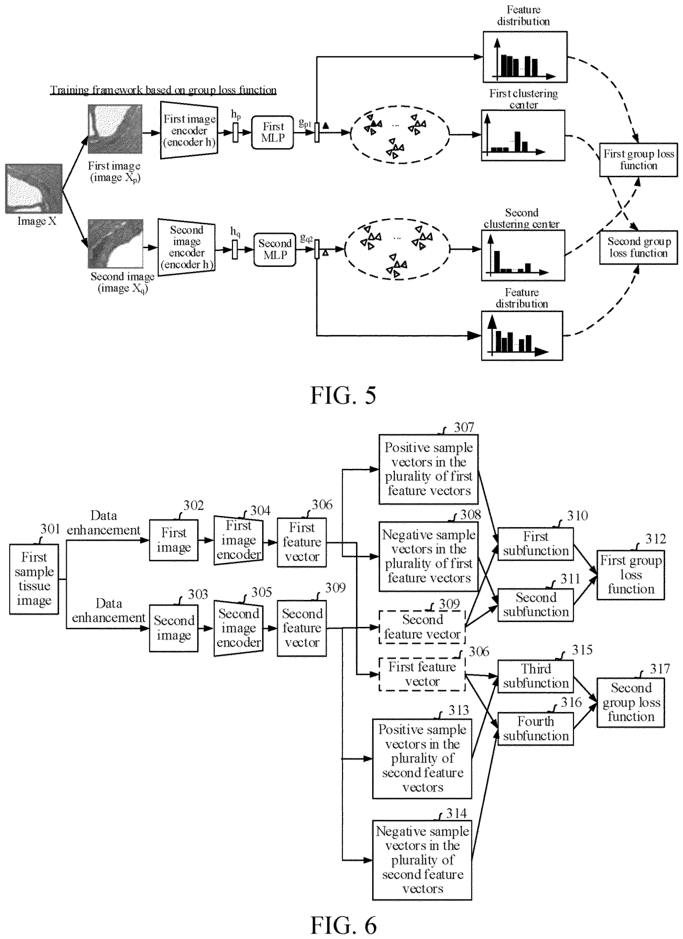

The first sample tissue image refers to an image for training the image encoder in this disclosure, that is, a local regional image (a small image) in a WSI. Referring to FIG. 5 together, an image X is the first sample tissue image.

**Step 402:** Perform first data enhancement on the first sample tissue image using a first enhancement parameter to obtain a first image; input the first image into a first image encoder to obtain a first feature vector.

The first feature vector is used as a contrast vector for contrast learning.

Schematically, data enhancement is used for adjusting the first sample tissue image to generate a new image. That is, the data enhancement, also called data amplification, is intended to generate more data from limited data without substantially increasing the data. In some embodiments, performing data enhancement means extracting substantial data from the original image that represents visual information of the original image, generating non-substantial data from the substantial data, and adding the non-substantial data to the original image.

In some embodiments, an enhancement parameter corresponding to the data enhancement refers to an adjustment parameter when the first sample tissue image is adjusted. Different types of data enhancement correspond to different types of enhancement parameters, and for a same type of data enhancement methods, enhancement parameters with different values belong to different data enhancement methods.

In an embodiment, the data enhancement methods include at least one of the following:

- rotation/reflection transformation: an image is randomly rotated at a certain angle, and an orientation of image content is changed, where the enhancement parameter is an angle value of image rotation;

- flip transformation: the image is horizontally or vertically flipped, where the enhancement parameter is a flip direction;

- scaling transformation: the image is zoomed in or out on at a certain scale, where the enhancement parameter is a scaling value;

- translation transformation: the image is translated in a certain manner on an image plane, where the enhancement parameter is a translation distance;

- a translation range and a translation step size are specified in a random or artificially defined manner, and a position of the image is changed by translation in a horizontal or vertical direction, where the enhancement parameter includes a translation direction, a translation step size, and a translation range;

- scale transformation: the image is zoomed in or out on according to a specified scale factor; or with reference to a scale invariant feature transform (SIFT) feature extraction idea, the image is filtered by using the specified scale factor, to construct a scale space and change a size or a blur degree of the image content, where the enhancement parameter is a size transformation value;

- contrast transformation: in an HSV color space of the image, saturation S and V brightness components are changed, a hue H is kept unchanged, an exponential operation is performed on the S and V components of each pixel (an exponential factor ranges from 0.25 to 4), and an illumination change is increased, where the enhancement parameter is a specific value of the exponential factor;

- noise perturbation: RGB of each pixel of the image is randomly perturbed, and common noise patterns are impulse noise and Gaussian noise, where the enhancement parameter is an amount of noise added to the image;

- color change: random perturbation is added to an image channel, where the enhancement parameter includes a perturbation range, a quantity of perturbation, and the like; and

- the image is inputted, and a region is randomly selected and blackened, where the enhancement parameter includes a size of the selected region and a quantity of regions.

In this embodiment, the first data enhancement is performed on the first sample tissue image to obtain the first image, and feature extraction is performed on the first image through the first image encoder, to obtain the first feature vector.

In all embodiments of the present application, the image encoder may be modeled as a neutral network having a function of extracting features of an input image. In an embodiment, the first image is inputted into the first image encoder to obtain a first intermediate feature vector; and the first intermediate feature vector is inputted into a first MLP to obtain the first feature vector. MLP may be modeled as a feedforward artificial neural network model that maps multiple input datasets to a single output dataset. The basic structure of a MLP model includes an input layer, an output layer, and at least one or more hidden layers. Each layer is composed of multiple neurons, and each neuron generates an output by weighting the input values and applying an activation function. The first MLP plays a transitional role and is used for improving an expression capability of the first image. Referring to FIG. 5 together, data enhancement is performed on an image X to obtain an image $X_p$, then the image $X_p$ is converted to a high-level semantic space $\mathbb{R}^d$ by using an encoder h, to obtain a first intermediate feature vector $h_p$, and the first intermediate feature vector $h_p$ is inputted into the first MLP to obtain a first feature vector $g_{p1}$. In this embodiment, the first feature vector is determined to be a contrast vector for contrast learning. The contrast vector for contrast learning may be a positive sample vector or a negative sample vector.

**Step 403:** Perform second data enhancement on the first sample tissue image using a second enhancement parameter to obtain a second image; and input the second image into a second image encoder to obtain a second feature vector.

The second feature vector is used as an anchor vector for the contrast learning. The anchor vector means a reference vector used to compare with the contrast vector in S402. And a first enhancement parameter corresponding to the first data enhancement and a second enhancement parameter corresponding to the second data enhancement are different.

In this embodiment, second data enhancement is performed on the first sample tissue image to obtain the second image, and feature extraction is performed on the second image through the second image encoder, to obtain the second feature vector. The second image encoder may have a same structure with the first image encoder, but having different parameters.

In an embodiment, the second image is inputted into the second image encoder to obtain a second intermediate feature vector; and the second intermediate feature vector is inputted into a second MLP to obtain the second feature vector. The second MLP plays a transitional role and is used for improving an expression capability of the second image. Referring to FIG. 5 together, data enhancement is performed on the image X to obtain an image $X_q$, then the image $X_q$ is converted to a high-level semantic space $\mathbb{R}^d$ by using the encoder h, to obtain a second intermediate feature vector

$h_q$, and the second intermediate feature vector $h_q$ is inputted into the second MLP, to obtain a second feature vector $g_{q2}$. In this embodiment, the second feature vector is determined to be an anchor vector for contrast learning.

**Step 404:** Cluster first feature vectors respectively corresponding to different first sample tissue images to obtain a plurality of first clustering centers.

In an embodiment, a plurality of different first sample tissue images are inputted at the same time, and first feature vectors respectively corresponding to the plurality of first sample tissue images are clustered to obtain a plurality of first clustering centers. Clustering means dividing the first feature vectors respectively corresponding to the different first sample tissue images into a plurality of sets including the first feature vectors. The sets including the first feature vectors are also called clusters. The first clustering centers each refer to the first feature vector at a central position of one set of first feature vectors.

In some embodiments, the clustering method includes at least one of the following:

1. K-means clustering: k objects are randomly selected, each object initially represents a clustering center, the remaining objects each are assigned to the nearest cluster according to distances between the object and the clustering centers, a clustering center corresponding to each cluster is recalculated, and the whole process is repeated until convergence.

2. Hierarchical clustering algorithm: Each object is taken as a separate cluster, and then the clusters are merged into larger and larger clusters until all objects are in one cluster.

In some embodiments, the plurality of different first sample tissue images are sample tissue images of a same training batch. In an embodiment, the first feature vectors respectively corresponding to the different first sample tissue images are clustered into S categories, and S first clustering centers of the S categories are expressed as $S_j^q$, where $j \in [1, ..., S]$. Refer to FIG. 5 which shows one of first clustering centers respectively corresponding to first feature vectors of different first sample tissue images.

**Step 405:** Determine a first feature vector in the plurality of first clustering centers that has a maximum similarity value with the second feature vector to be a first positive sample vector in a plurality of first feature vectors.

Schematically, similarity values refer to data for measuring vector distances between the first clustering centers and the second feature vector. A greater similarity value indicates a shorter vector distance between the first feature vector as the first clustering center and the second feature vector. A smaller similarity value indicates a farther vector distance between the first feature vector as the first clustering center and the second feature vector.

In some embodiments, the vector distance is calculated in at least one of the following manners:

1. Euclidean Metric: an actual distance between two feature vectors in a feature space;

2. Manhattan Distance: a distance between two feature vectors in a north-south direction plus a distance in an east-west direction;

3. Chebyshev Distance: a maximum value of an absolute value of a numerical difference between coordinates of two feature vectors; and

4. Cosine Distance: a cosine value of an angle between two feature vectors.

Schematically, when vector distances respectively corresponding to the plurality of first clustering centers and the second feature vector are calculated, reciprocals of the vector distances are taken as similarity values respectively corresponding to the plurality of first clustering centers and the second feature vectors.

In an embodiment, the first clustering center in the S first clustering centers that is closest to the second feature vector is taken as a first positive sample vector, expressed as $S_j^q +$. The first clustering center is the first feature vector.

**Step 406:** Determine the first feature vectors in the plurality of first feature vectors other than the first positive sample vector to be first negative sample vectors in the plurality of first feature vectors.

In an embodiment, the first feature vectors in the S first clustering centers other than $S_j^q +$ are taken as first negative sample vectors, expressed as $S_j^q -$.

**Step 407:** Generate a first subfunction based on the second feature vector and the first positive sample vector in the plurality of first feature vectors.

Schematically, a preset exponential expression is acquired, and a product result obtained by multiplying the second feature vector by the first positive sample vector into the exponential expression to obtain the first subfunction.

In an embodiment, the first subfunction is expressed as $\exp\left(g_{q2} \cdot S_j^q +/\tau\right)$. The second feature vector $g_{q2}$ is taken as the anchor vector in the contrast learning, and $S_j^q+$ is taken as the first positive sample vector in the contrast learning.

**Step 408:** Generate a second subfunction based on the second feature vector and the first negative sample vectors in the plurality of first feature vectors.

Schematically, a preset exponential expression is acquired, and a product result obtained by multiplying the second feature vector by the first negative sample vector into the exponential expression to obtain the second subfunction.

In an embodiment, the second subfunction is expressed as $\sum_{i=1}^{S-1} \exp\left(g_{q2} \cdot S_j^q -/\tau\right)$. The second feature vector $g_{q2}$ is taken as the anchor vector in the contrast learning, and $S_j^q-$ is taken as the first negative sample vector in the contrast learning.

**Step 409:** Generate a first group loss function based on the first subfunction and the second subfunction.

Schematically, a preset logarithmic expression is acquired, a function sum of the first subfunction and the second subfunction, and a quotient between the first subfunction and the function sum is substituted into the logarithmic expression to obtain the first group loss function.

In an embodiment, the first group loss function is expressed as:

$$\mathcal{L}_{GroupNCE1} = -\frac{1}{2} log \frac{exp\left(g_{q2} \cdot S_j^q +/\tau\right)}{exp\left(g_{q2} \cdot S_j^q +/\tau\right) + \sum_{i=1}^{S-1} exp\left(g_{q2} \cdot S_j^q -/\tau\right)}; (1)$$

where $\mathcal{L}_{GroupNCE1}$ denotes the first group loss function, and *log* denotes a logarithmic operation.

**Step 410:** Train the first image encoder and the second image encoder simultaneously by using the first group loss function; and determine the trained second image encoder to be a final image encoder obtained by training.

The first image encoder and the second image encoder may be trained according to the first group loss function. In this embodiment, the second image encoder is determined to be an image encoder finally obtained by training. The training means iteratively adjusting the model parameters of the first image encoder and the second image encoder according to the first group loss function, until the value of first group loss function reaches a predefined threshold.

Based on the above, by further distinguishing the positive samples identified in the related technology, "positive degrees" of the positive samples are further distinguished in the positive samples, so that a loss function used in contrast learning (also called a contrast learning paradigm) can more accurately zoom in on the anchor image and the positive samples, thereby better training the image encoder, and the trained image encoder can better learn common features between the anchor image and the positive samples.

FIG. 3 and FIG. 4 show that an image encoder is trained through a feature vector sample. A contrast learning sample triple includes (an anchor vector, a positive vector, and a negative vector). In another embodiment, the image encoder may alternatively be trained simultaneously through a plurality of feature vector sample triples. In the following, it will be introduced that the image encoder is trained simultaneously through two feature vector sample triples (an anchor vector 1, a positive vector 1, and a negative vector 1) and (an anchor vector 2, a positive vector 2, and a negative vector 2). The anchor vector 1 and the anchor vector 2 are vectors obtained by performing data enhancement on the first sample tissue images respectively and passing through different image encoders and different MLPs respectively. A number of the feature vector sample triples specifically constructed is not limited in this disclosure.

**Related content of second group loss function -- 1-1-2:**

FIG. 6 shows a training framework of an image encoder according to an exemplary embodiment. For example, the framework is applied to the image encoder training device 21 shown in FIG. 1. As shown in FIG. 6, a first image 302 is obtained by first data enhancement on a first sample tissue image 301, the first image 302 passes through a first image encoder 304 to obtain a first feature vector 306, and when a plurality of first sample tissue images 301 are inputted at the same time, a plurality of first feature vectors will be distinguished into first positive sample vectors 307 in the plurality of first feature vectors and first negative sample vectors 308 in the plurality of first feature vectors; a second image 303 is obtained by second data enhancement on the first sample tissue image 301, and the second image 303 passes through a second image encoder 305 to obtain a second feature vector 309; a first subfunction 310 is generated based on the first positive sample vectors 307 in the plurality of first feature vectors and the second feature vector 309; a second subfunction 311 is generated based on the first negative sample vectors 308 in the plurality of first feature vectors and the second feature vector 309; and a first group loss function 312 is constructed based on the first subfunction 310 and the second subfunction 311.

Different from the training framework shown in FIG. 3, FIG. 6 further shows that, when a plurality of first sample tissue images 301 are inputted at the same time, a plurality of second feature vectors will be distinguished into second positive sample vectors 313 in the plurality of second feature vectors and second negative sample vectors 314 in the plurality of second feature vectors; a third subfunction 315 is generated based on the second positive sample vectors 313 in the plurality of second feature vectors and the first feature vector 306; a fourth subfunction 316 is generated based on the second negative sample vectors 314 in the plurality of second feature vectors and the first feature vector 306; and a second group loss function 317 is constructed based on the third subfunction 315 and the fourth subfunction 316. The second group loss function 317 is used for zooming in on a distance between an anchor image and a positive sample.

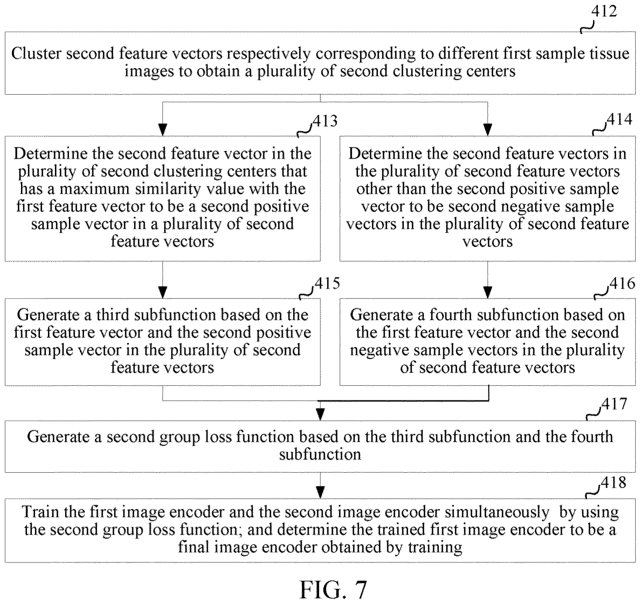

Based on the image encoder training method shown in FIG. 4, FIG. 7 further provides step 412 to step 418 on the basis of the steps of the method in FIG. 4. For example, the method shown in FIG. 7 is applied to the training framework of the image encoder shown in FIG. 6. The method includes the following steps.

In this embodiment, the second feature vector is a contrast vector for the contrast learning, and the first feature vector is an anchor vector for the contrast learning.

**Step 412:** Cluster second feature vectors respectively corresponding to different first sample tissue images to obtain a plurality of second clustering centers.

In an embodiment, a plurality of different first sample tissue images are inputted at the same time, and the second feature vectors respectively corresponding to the different first sample tissue images are clustered to obtain a plurality of second clustering centers. In some embodiments, the plurality of different first sample tissue images are sample tissue images of a same training batch. In an embodiment, the second feature vectors of the different first sample tissue images are clustered into S categories, and S second clustering centers of the S categories are expressed as $S_j^p$, where $j \in [1, ..., S]$.

Refer to FIG. 5 which shows one of second clustering centers respectively corresponding to second feature vectors of different first sample tissue images.

Clustering means dividing the second feature vectors respectively corresponding to the different first sample tissue images into a plurality of sets including the second feature vectors. The sets including the second feature vectors are also called clusters. The second clustering centers each refer to the second feature vector at a central position of one set of second feature vectors.

**Step 413:** Determine the second feature vector in the plurality of second clustering centers that has a maximum similarity value with the first feature vector to be a second positive sample vector in a plurality of second feature vectors.

Schematically, similarity values refer to data for measuring vector distances between the second clustering centers and the first feature vector. A greater similarity value indicates a shorter vector distance between the first feature vector as the second clustering center and the first feature vector. A smaller similarity value indicates a farther vector distance between the first feature vector as the second clustering center and the first feature vector. Schematically, when vector distances respectively corresponding to the plurality of second clustering centers and the first feature vector are calculated, reciprocals of the vector distances are taken as similarity values respectively corresponding to the plurality of second clustering centers and the first feature vectors.

In an embodiment, the second clustering center in the S second clustering centers that is closest to the first feature vector is taken as a second positive sample vector, expressed as $S_j^p +$.

**Step 414:** Determine the second feature vectors in the plurality of second feature vectors other than the second positive sample vector to be second negative sample vectors in the plurality of second feature vectors.

In an embodiment, the second feature vectors in the S second clustering centers other than $S_j^p +$ are taken as second negative sample vectors, expressed as $S_j^p -$.

**Step 415:** Generate a third subfunction based on the first feature vector and the second positive sample vector in the plurality of second feature vectors.

Schematically, a preset exponential expression is acquired, and a product result obtained by multiplying the first feature vector by the second positive sample vector into the exponential expression to obtain the third subfunction.

In an embodiment, the third subfunction is expressed as $\exp\left(g_{p1} \cdot S_j^p +/\tau\right)$.

**Step 416:** Generate a fourth subfunction based on the first feature vector and the second negative sample vectors in the plurality of second feature vectors.

Schematically, a preset exponential expression is acquired, and a product result obtained by multiplying the first feature vector by the second negative sample vector into the exponential expression to obtain the fourth subfunction.

In an embodiment, the fourth subfunction is expressed as $\sum_{i=1}^{S-1} \exp\left(g_{p1} \cdot S_j^p -/\tau\right)$. The first feature vector $g_{p1}$ is taken as the anchor vector in the contrast learning, and $S_j^p -$ is taken as the second negative sample vector in the contrast learning.

**Step 417:** Generate a second group loss function based on the third subfunction and the fourth subfunction.

Schematically, a preset logarithmic expression is acquired, a function sum of the third subfunction and the fourth subfunction, and a quotient between the third subfunction and the function sum is substituted into the logarithmic expression to obtain the second group loss function. In an embodiment, the second group loss function is expressed as:

$$\mathcal{L}_{GroupNCE2} = -\frac{1}{2} log \frac{exp\left(g_{p1} \cdot S_j^p +/\tau\right)}{exp\left(g_{p1} \cdot S_j^p +/\tau\right)+\sum_{i=1}^{S-1} exp\left(g_{p1} \cdot S_j^p -/\tau\right)}; (2)$$

where $\mathcal{L}_{GroupNCE2}$ denotes the second group loss function, and *log* denotes a logarithmic operation.

**Step 418:** Train the first image encoder and the second image encoder simultaneously by using the second group loss function; and determine the trained first image encoder to be a final image encoder obtained by training.

The first image encoder and the second image encoder may be trained according to the second group loss function. The first image encoder is determined to be an image encoder finally obtained by training. Schematically, a function difference between the first group loss function and the second group loss function is acquired as a complete group loss function. In an embodiment, the complete group loss function may be constructed by combining the first group loss function obtained in step 409 and the second group loss function obtained in step 417:

$$\mathcal{L}_{GroupNCE} = -\frac{1}{2} log \frac{exp\left(g_{p1} \cdot S_j^p +/\tau\right)}{exp\left(g_{p1} \cdot S_j^p +/\tau\right)+\sum_{i=1}^{S-1} exp\left(g_{p1} \cdot S_j^p -/\tau\right)} -\frac{1}{2} log \frac{exp\left(g_{q2} \cdot S_j^q +/\tau\right)}{exp\left(g_{q2} \cdot S_j^q +/\tau\right)+\sum_{i=1}^{S-1} exp\left(g_{q2} \cdot S_j^q -/\tau\right)}; (3)$$

where $L_{GroupNCE}$ denotes the complete group loss function. The first image encoder and the second image encoder are trained according to the complete group loss function. The first image encoder and the second image encoder are determined to be image encoders finally obtained by training. In some embodiments, after step 418, step 419 (not shown) is further included, in which a parameter of a third image encoder is updated in a weighted manner by using a model parameter shared between the first image encoder and the second image encoder, and the third image encoder is different from the first image encoder and the second image encoder. As can be seen from the training processes of the first image encoder and the second image encoder according to the above method, the training processes of the first image encoder and the second image encoder are symmetrical, so a same model parameter exists in the first image encoder and the second image encoder, that is, the shared model parameter. A weight is set, and a model parameter of the third encoder before the updating and the shared model parameter are weighted and combined by using the weight, to obtain a model parameter of the third image encoder after the updating.

Schematically, a formula for updating the parameter of the third image encoder is as follows:

$$\theta' = m \cdot \theta' + (1-m) \cdot \theta; (4)$$

where $\theta'$ on the left of the formula (4) denotes the model parameter of the third image encoder after the updating, $\theta'$ on the right of the formula (4) denotes a parameter of the third image encoder before the updating, $\theta$ denotes the model parameter shared by the first image encoder and the second image encoder, and m denotes the weight. In some embodiments, m is 0.99.

Based on the above, by constructing two feature vector sample triples (a second feature vector, positive vectors in a plurality of first feature vectors, and negative vectors in the plurality of first feature vectors) and (a first feature vector, positive vectors in a plurality of second feature vectors, and negative vectors in the plurality of second feature vectors), the encoding effect of the trained image encoder is further improved, and the complete group loss function constructed is more robust than the first group loss function or the second group loss function, thereby improving precision of image features extracted by the trained image encoder and then improving accuracy of results of downstream search tasks.

In addition to jointly training the first image encoder and the second image encoder, the parameter of the third image encoder is also updated through the first image encoder, which is conducive to speeding up convergence of loss functions and improving training efficiency of the image encoder. Besides, in addition to training the third image encoder by using the first image encoder, the third image encoder is also trained by using the model parameters shared between the first image encoder and the second image encoder, so the third encoder is trained from different dimensions while training manners of the image encoder are enriched, enabling image features extracted by the trained third image encoder to be more accurate.

The content of training an image encoder based on a group loss function has been fully introduced above. The image encoder includes the first image encoder, the second image encoder, and the third image encoder. In the following, it will be introduced that the image encoder is trained based on a weight loss function.

**Related content of first weight loss function -- 1-2-1:**

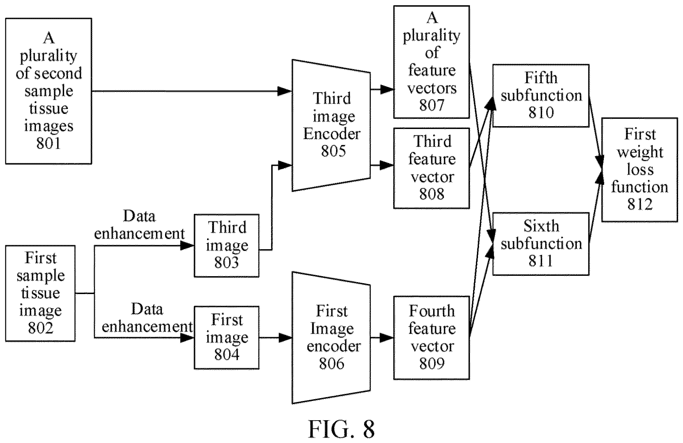

FIG. 8 shows a training framework of an image encoder according to an exemplary embodiment. For example, the framework is applied to the image encoder training device 21 shown in FIG. 2. As shown in FIG. 8, a plurality of second sample tissue images 801 pass through a third image encoder 805 to generate a plurality of feature vectors 807; a third image 803 is obtained by data enhancement on the first sample tissue image 802, and the third image 803 passes through a third image encoder 805 to generate a third feature vector 808; a first image 804 is obtained by data enhancement on the first sample tissue image 802, and the first image 804 passes through a first image encoder 806 to generate a fourth feature vector 809; a fifth subfunction 810 is generated based on the third feature vector 808 and the fourth feature vector 809; a sixth subfunction 811 is generated based on a plurality of feature vectors 807 and the fourth feature vector 809; and a first weight loss function 812 is generated based on the fifth subfunction 810 and the sixth subfunction 811. The first weight loss function 812 is used for zooming out on a distance between an anchor image and a negative sample.

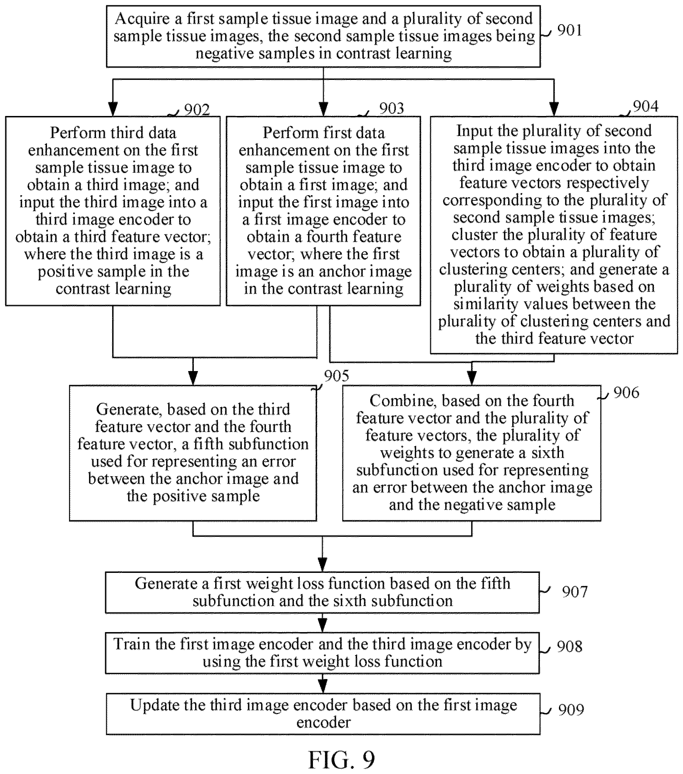

FIG. 9 is a flowchart of an image encoder training method according to an exemplary embodiment. For example, the method is applied to the training framework of the image encoder shown in FIG. 8. The method includes the following steps.

**Step 901:** Acquire a first sample tissue image and a plurality of second sample tissue images, the second sample tissue images being negative samples in contrast learning.

The first sample tissue image refers to an image for training the image encoder in this disclosure. The second sample tissue images each refer to an image for training the image encoder in this disclosure. The first sample tissue image and the second sample tissue image are different small images. That is, the first sample tissue image and the second sample tissue image are not a small image X1 and a small image X2 obtained by data enhancement on a small image X, but are the small image X and a small image Y respectively. The small image X and the small image Y are small images in different large images, or the small image X and the small image Y are different small images in a same large image.

In this embodiment, the second sample tissue images are taken as negative samples in the contrast learning, and the contrast learning is intended to zoom in on a distance between an anchor image and a positive sample and zoom out on a distance between the anchor image and a negative sample.

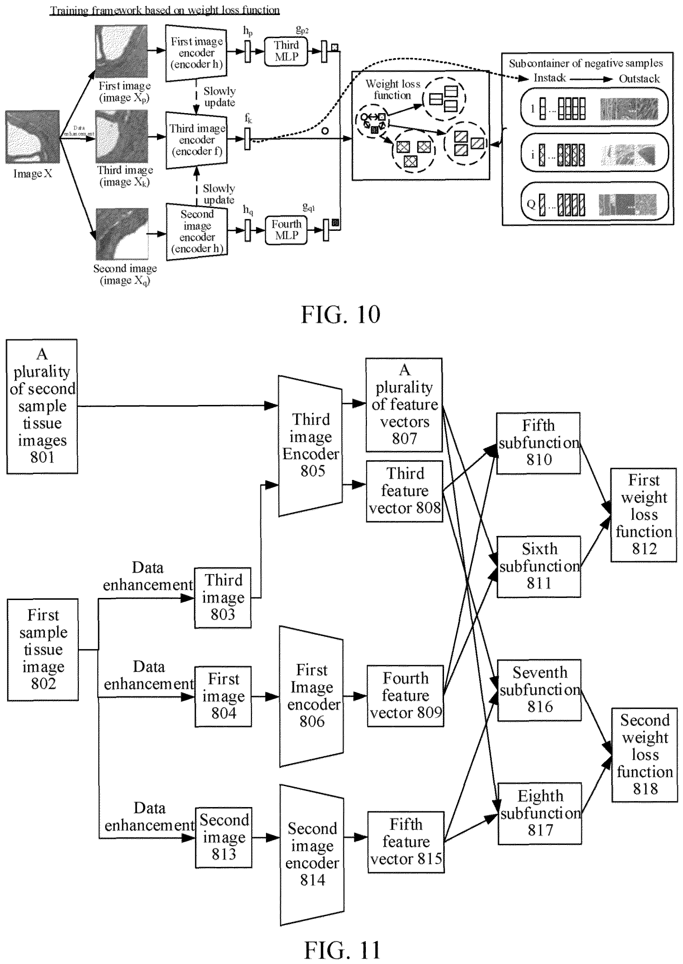

Referring to FIG. 10 together, the image X is the first sample tissue image, and a subcontainer of negative samples is a container that contains feature vectors respectively corresponding to the plurality of second sample tissue images.

**Step 902:** Perform third data enhancement on the first sample tissue image to obtain a third image; and input the third image into a third image encoder to obtain a third feature vector; where the third image is a positive sample in the contrast learning.

The third data enhancement is different from the first data enhancement and the second data enhancement.

In this embodiment, the third data enhancement is performed on the first sample tissue image to obtain the third image, and the third image is taken as the positive sample in the contrast learning. Referring to FIG. 10 together, the third data enhancement is performed on the image X to obtain an image $X_k$, and then the image $X_k$ is converted to a higher semantic space $\mathbb{R}^d$ by using an encoder f (the third image encoder), to obtain a third feature vector $f_k$.

**Step 903:** Perform first data enhancement on the first sample tissue image to obtain a first image; and input the first image into a first image encoder to obtain a fourth feature vector; where the first image is an anchor image in the contrast learning.

In this embodiment, the first data enhancement is performed on the first sample tissue image to obtain the first image, and the first image is taken as the anchor image in the contrast learning. In an embodiment, the first image is inputted into the first image encoder to obtain a first intermediate feature vector; and the first intermediate feature vector is inputted into a third MLP to obtain the fourth feature vector. The third MLP plays a transitional role and is used for improving an expression capability of the first image. Referring to FIG. 10 together, data enhancement is performed on the image X to obtain an image $X_p$, then the image $X_p$ is converted to a high-level semantic space $\mathbb{R}^d$ by using an encoder h (i.e., the first image encoder), to obtain a first intermediate feature vector $h_p$, and the first intermediate feature vector $h_p$ is inputted into the third MLP to obtain a fourth feature vector $g_{p2}$.

**Step 904:** Input the plurality of second sample tissue images into the third image encoder to obtain feature vectors respectively corresponding to the plurality of second sample tissue images; cluster the plurality of feature vectors to obtain a plurality of clustering centers; and generate a plurality of weights based on similarity values between the plurality of clustering centers and the third feature vector.

The third image encoder is different from the first image encoder and the second image encoder.

In this embodiment, the second sample tissue images are negative samples in the contrast learning, the feature vectors respectively corresponding to the plurality of second sample tissue images are clustered, and weights are assigned respectively to the plurality of feature vectors according to the similarity values between the plurality of clustering centers and the third feature vector. Referring to FIG. 10 together, the feature vectors respectively corresponding to the plurality of second sample tissue images, that is, the plurality of feature vectors, are stored in the subcontainer of negative samples, the plurality of second sample tissue images are put into a storage queue through a stack operation after passing through the encoder f, and in the storage queue, corresponding feature vectors in the queue are clustered into Q categories by K-means clustering, thereby constructing Q subqueues. A clustering center of each subqueue is expressed as $c_j (j = 1, ..., Q)$, and Q is a positive integer. Then, a similarity score between each clustering center and the third feature vector $f_k$ is calculated to determine potential erroneous negative samples. Finally, a weight $\phi\left(f_k^-\right)$ of each feature vector in the storage queue is obtained, which is calculated as follows:

$$\phi(f_k^-) = \begin{cases} w, if\ \delta\left(f_k, c_j\right) \\ 1,\ else \end{cases} ; (5)$$

where $\delta()$ is a discriminant function. If two inputs are consistent, $\delta()$ outputs 1. Otherwise, $\delta()$ outputs 0. In this embodiment, $\delta()$ is used for determining whether a clustering center $c_j$ of a $j^{th}$ category is similar to $f_k$, w is an assigned weight, and $w \in [0,1]$. The manner of calculating a similarity is not limited in this disclosure, including, but not limited to, calculating a cosine similarity, a Euclidean distance, and the like.

In an embodiment, weights respectively corresponding to the plurality of clustering centers are negatively correlated with the similarity values between the clustering centers and the third feature vector; and for a $j^{th}$ clustering center in the plurality of clustering centers, feature vectors included in the category to which the $j^{th}$ clustering center belongs correspond to a same weight. In the formula (1), smaller weights w are assigned to a plurality of feature vectors corresponding to a category of a clustering center that is more similar to $f_k$, and larger weights w are assigned to a plurality of feature vectors corresponding to a category of a clustering center that is less similar to $f_k$. Schematically, the feature vectors respectively corresponding to the plurality of second sample tissue images are clustered to obtain 3 categories, and the clustering centers are respectively $c_1$, $c_2$, and $c_3$. The category to which the clustering center $c_1$ belongs includes a feature vector 1, a feature vector 2, and a feature vector 3; the category to which the clustering center $c_2$ belongs includes a feature vector 4, a feature vector 5, and a feature vector 6; and the category to which the clustering center $c_3$ belongs includes a feature vector 7, a feature vector 8, and a feature vector 9. If similarity values between the clustering centers $c_1$, $c_2$, and $c_3$ and $f_k$ are arranged in descending order, weights corresponding to the categories to which the clustering centers $c_1$, $c_2$, and $c_3$ belong are arranged in ascending order. Moreover, the feature vectors 1, 2, and 3 correspond to a same weight, the feature vectors 4, 5, and 6 correspond to a same weight, and the feature vectors 7, 8, and 9 correspond to a same weight.

In an embodiment, when the first sample tissue image belongs to first sample tissue images in a first training batch, the feature vectors respectively corresponding to the plurality of second sample tissue images are clustered to obtain a plurality of clustering centers of the first training batch. In another embodiment, when the first sample tissue image belongs to first sample tissue images in an $n^{th}$ training batch, a plurality of clustering centers corresponding to an $n-1^{th}$ training batch are updated to a plurality of clustering centers corresponding to the $n^{th}$ training batch, where n is a positive integer greater than 1.

In some embodiments, for a $j^{th}$ clustering center in the plurality of clustering centers of the $n-1^{th}$ training batch, the $j^{th}$ clustering center of the $n-1^{th}$ training batch is updated based on first sample tissue images in the $n^{th}$ training batch that belong to a $j^{th}$ category, to obtain a $j^{th}$ clustering center of the $n^{th}$ training batch, where i is a positive integer.

Referring to FIG. 10 together, the $j^{th}$ clustering center $c_j$ of the n-1$^{th}$ training batch is updated to the $j^{th}$ clustering center $c_{j*}$ of the $n^{th}$ training batch, and a formula is as follows:

$$c_{j*} = m_c c_j + (1 - m_c) \cdot \frac{1}{|\mathcal{B}_j|} \sum_{f_k^i \in \mathcal{B}_j} f_k^i; \quad (6)$$

where $c_{j*}$ denotes the updated $j^{th}$ clustering center of the $n^{th}$ training batch; $m_c$ denotes a weight used for updating, $m_c \in [0,1]$; and $B_j$ represents a feature set belonging to a $j^{th}$ category and within a plurality of third feature vectors (a plurality of $f_k$) respectively corresponding to a plurality of first sample tissue images (a plurality of images X) of the $n^{th}$ training batch. $f_k^i$ represents an $i^{th}$ feature vector within the plurality of third feature vectors (the plurality of $f_k$) of the $n^{th}$ training batch belonging to the $j^{th}$ category. $1/|\mathcal{B}_j|(\sum_{f_k^i \in \mathcal{B}_j} f_k^i)$ is used for calculating a feature mean of the plurality of third feature vectors (the plurality of $f_k$) of the $n^{th}$ training batch belonging to the $j^{th}$ category.

In an embodiment, in each training cycle, all clustering centers will be updated by re-clustering all negative sample feature vectors in a repository. It may be understood that a purpose of updating the plurality of clustering centers of the n-1$^{th}$ training batch to the plurality of clustering centers of the $n^{th}$ training batch is to prevent an increasingly longer distance between a negative sample feature vector in a negative sample container and an inputted first sample tissue image.

With the continuous training of the image encoder, the image encoder has a better effect of zooming out on the anchor image and the negative sample. It is assumed that the image encoder zooms out on an image X of a previous training batch and the negative sample to a first distance, the image encoder zooms out on an image X of a current training batch and the negative sample to a second distance, the second distance is greater than the first distance, the image encoder zooms out on an image X of a following training batch and the negative sample to a third distance, and the third distance is greater than the second distance. However, if a negative sample image is not updated (that is, the clustering center is updated), an increase between the third distance and the second distance will be less than an increase between the second distance and the first distance, and a training effect of the image encoder will gradually become worse. If the negative sample image is updated (that is, the clustering center is updated), a distance between the updated negative sample image and the image X will be appropriately zoomed in on, which balances a gradually increasing zoom-out effect of the image encoder and enables the image encoder to maintain long-term and more frequent training, and the image encoder finally trained has a better capability to extract image features, making the extracted image features more accurate. Moreover, the clustering centers are determined according to categories to which sample tissue images belong, which is conducive to ensuing a corresponding relationship between the clustering centers between previous and following batches and preventing correspondence errors, thereby improving accuracy of the determination of the clustering centers. In addition, the feature vectors are clustered, and weights of all feature vectors under a category are the same, which is conducive to classifying the feature vectors and making the training effect better by weighting the feature vectors.

**Step 905:** Generate, based on the third feature vector and the fourth feature vector, a fifth subfunction used for representing an error between the anchor image and the positive sample.

In this embodiment, the fifth subfunction is generated according to the third feature vector and the fourth feature vector, and the fifth subfunction is used for representing the error between the anchor image and the positive sample. Referring to FIG. 10 together, the fifth subfunction may be expressed as exp $(g_{p2} \cdot f_k/\tau)$, from which it may be seen that the fifth subfunction is formed by the third feature vector $f_k$ and the fourth feature vector $g_{p2}$.

**Step 906:** Combine, based on the fourth feature vector and the plurality of feature vectors, the plurality of weights to generate a sixth subfunction used for representing an error between the anchor image and the negative sample.

In this embodiment, according to the fourth feature vector and the feature vectors respectively corresponding to the plurality of second sample tissue images, the plurality of weights are combined to generate the sixth subfunction, and the sixth subfunction is used for representing the error between the anchor image and the negative sample.

Referring to FIG. 10 together, the sixth subfunction may be expressed as $\sum_{i=1}^{K} \exp\left(\phi(f_k^-) \cdot g_{p2} \cdot f_k^-/\tau\right)$, where $\phi(f_k^-)$ denotes a weight of an $i^{th}$ negative sample feature vector (i.e., the feature vector of the second sample tissue image), $f_k^-$ denotes the $i^{th}$ negative sample feature vector, the negative sample container includes a total of K negative sample feature vectors, and $g_{p2}$ denotes a feature vector of the anchor image (i.e., the fourth feature vector), where K is a positive integer.

**Step 907:** Generate a first weight loss function based on the fifth subfunction and the sixth subfunction.

Referring to FIG. 10 together, the first weight loss function may be expressed as:

$$\mathcal{L}_{WeightedNCE1} = -\frac{1}{2} log \frac{\exp\left(g_{p2} \cdot f_k / \tau\right)}{\exp\left(g_{p2} \cdot f_k / \tau\right) + \sum_{i=1}^{K} \exp\left(\phi(f_k^-) \cdot g_{p2} \cdot f_k^- / \tau\right)}; (7)$$

where $\mathcal{L}_{WeightedNCE1}$ denotes the first weight loss function, and *log* denotes a logarithmic operation. In some embodiments, weighted summation is performed on the first subfunction and the second subfunction to obtain the first weight loss function. In some embodiments, weighted values respectively corresponding to the first subfunction and the second subfunction are not limited in this disclosure. In some embodiments, the weighted values are hyperparameters set in advance.

**Step 908:** Train the first image encoder and the third image encoder based on the first weight loss function.

The first image encoder and the third image encoder are trained according to the first weight loss function.

**Step 909:** Update the third image encoder based on the first image encoder.

The third image encoder is updated based on the first image encoder. In some embodiments, a parameter of the third image encoder is updated in a weighted manner according to a parameter of the first image encoder.

Schematically, a formula for updating the parameter of the third image encoder is as follows:

$$\theta' = m \cdot \theta' + (1-m) \cdot \theta; (8)$$

where $\theta'$ on the left of the formula (8) denotes a parameter of the third image encoder after the updating, $\theta'$ on the right of the formula (8) denotes a parameter of the third image encoder before the updating, $\theta$ denotes the parameter of the first image encoder, and m is a constant. In some embodiments, m is 0.99.

Based on the above, by assigning weights to the negative samples identified in the related technology and further distinguishing "negative degrees" of the negative samples in the negative samples, a loss function used in contrast learning (also called a contrast learning paradigm) can more accurately zoom out on the anchor image and the negative samples and reduce influences of potential false negative samples, thereby better training the image encoder, and the trained image encoder can better distinguish different features between the anchor image and the negative samples. Therefore, precision of image features extracted by the image encoder is improved, thereby improving accuracy of results of downstream search tasks.

FIG. 8 and FIG. 9 above show that the third image encoder is trained through a sample triple. The sample triple includes (an anchor image, a positive sample, and a negative sample). In another embodiment, the third image encoder may alternatively be trained through a plurality of sample triples. In the following, it will be introduced that the third image encoder is trained through two sample triples (an anchor image 1, a positive sample, and a negative sample) and (an anchor image 2, a positive sample, and a negative sample). The anchor image 1 and the anchor image 2 are images obtained by data enhancement on a same small image. A number of the sample triples specifically constructed is not limited in this disclosure.

**Related content of second weight loss function -- 1-2-2:**

FIG. 11 shows a training framework of an image encoder according to an exemplary embodiment. For example, the framework is applied to the image encoder training device 21 shown in FIG. 1. As shown in FIG. 11, a plurality of second sample tissue images 801 pass through a third image encoder 805 to generate a plurality of feature vectors 807; a third image 803 is obtained by data enhancement on the first sample tissue image 802, and the third image 803 passes through a third image encoder 805 to generate a third feature vector 808; a first image 804 is obtained by data enhancement on the first sample tissue image 802, and the first image 804 passes through a first image encoder 806 to generate a fourth feature vector 809; a fifth subfunction 810 is generated based on the fourth feature vector 809 and the third feature vector 808; a sixth subfunction 811 is generated based on a plurality of feature vectors 807 and the fourth feature vector 809; and a first weight loss function 812 is generated based on the fifth subfunction 810 and the sixth subfunction 811. Different from the training framework shown in FIG. 8, FIG. 11 further shows that: a second image 813 is obtained by data enhancement on the first sample tissue image 802, and the second image 813 passes through a second image encoder 814 to obtain a fifth feature vector 815; a seventh subfunction 816 is generated based on the fifth feature vector 815 and the third feature vector 808; an eighth subfunction 817 is generated based on the fifth feature vector 815 and the plurality of feature vectors 807; and a second weight loss function 818 is generated based on the seventh subfunction 816 and the eighth subfunction 817. The second weight loss function 818 is used for zooming out on a distance between an anchor image and a negative sample.

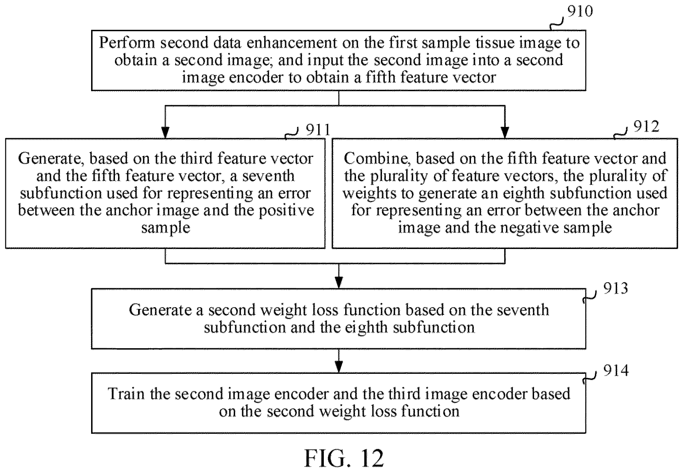

Based on the image encoder training method shown in FIG. 9, FIG. 12 further provides step 910 to step 914 on the basis of the steps of the method in FIG. 9. For example, the method shown in FIG. 12 is applied to the training framework of the image encoder shown in FIG. 11. The method includes the following steps.

**Step 910:** Perform second data enhancement on the first sample tissue image to obtain a second image; and input the second image into a second image encoder to obtain a fifth feature vector. The second image is an anchor image in contrast learning.

In this embodiment, the second data enhancement is performed on the first sample tissue image to obtain the second image, and the second image is taken as the anchor image in the contrast learning. In an embodiment, the second image is inputted into the second image encoder to obtain a second intermediate feature vector; and the second intermediate feature vector is inputted into a fourth MLP to obtain the fifth feature vector. The fourth MLP plays a transitional role and is used for improving an expression capability of the second image. Referring to FIG. 10 together, data enhancement is performed on the image X to obtain an image $X_q$, then the image $X_q$ is converted to a high-level semantic space $\mathbb{R}^d$ by using an encoder h (i.e., the second image encoder), to obtain a second intermediate feature vector $h_q$, and the second intermediate feature vector $h_q$ is inputted into the fourth MLP to obtain a fifth feature vector $g_{q1}$.

**Step 911:** Generate, based on the third feature vector and the fifth feature vector, a seventh subfunction used for representing an error between the anchor image and the positive sample.

In this embodiment, the seventh subfunction is generated according to the third feature vector and the fifth feature vector, and the seventh subfunction is used for representing the error between the anchor image and the positive sample. Referring to FIG. 10 together, the seventh subfunction may be expressed as $\exp(g_{q1} \cdot f_k/\tau)$, from which it may be seen that the seventh subfunction is formed by the third feature vector $f_k$ and the fifth feature vector $g_{q1}$.

**Step 912:** Combine, based on the fifth feature vector and the plurality of feature vectors, the plurality of weights to generate an eighth subfunction used for representing an error between the anchor image and the negative sample.

In this embodiment, according to the fifth feature vector and the feature vectors respectively corresponding to the plurality of second sample tissue images, the plurality of weights are combined to generate the eighth subfunction, and the eighth subfunction is used for representing the error between the anchor image and the negative sample.

Referring to FIG. 10 together, the eighth subfunction may be expressed as $\sum_{i=1}^{K} \exp\left(\phi(f_k^-) \cdot g_{q1} \cdot f_k^- / \tau\right)$, where $\phi(f_k^-)$ denotes a weight of an $i^{th}$ negative sample feature vector (i.e., the feature vector of the second sample tissue image), $f_k^-$ denotes the $i^{th}$ negative sample feature vector, the negative sample container includes a total of K negative sample feature vectors, and $g_{q1}$ denotes a feature vector of the anchor image (i.e., the fifth feature vector).

**Step 913:** Generate a second weight loss function based on the seventh subfunction and the eighth subfunction.

Referring to FIG. 10 together, the second weight loss function may be expressed as:

$$\mathcal{L}_{WeightedNCE2} = -\frac{1}{2} log \frac{\exp(g_{q1} \cdot f_k/\tau)}{\exp(g_{q1} \cdot f_k/\tau) + \sum_{i=1}^{K} \exp(\phi(f_k^-) \cdot g_{q1} \cdot f_k^-/\tau)}, (9)$$

where $\mathcal{L}_{WeightedNCE2}$ denotes the second weight loss function, and *log* denotes a logarithmic operation.

**Step 914:** Train the second image encoder and the third image encoder based on the second weight loss function.

The second image encoder and the third image encoder are trained according to the second weight loss function. In an embodiment, a complete weight loss function may be constructed in combination with the first weight loss function obtained in step 908:

$$\mathcal{L}_{WeightedNCE} = -\frac{1}{2} log \frac{\exp(g_{p2} \cdot f_k/\tau)}{\exp(g_{p2} \cdot f_k/\tau) + \sum_{i=1}^{K} \exp(\phi(f_k^-) \cdot g_{p2} \cdot f_k^-/\tau)} -$$

$$\frac{1}{2} log \frac{\exp(g_{q1} \cdot f_k/\tau)}{\exp(g_{q1} \cdot f_k/\tau) + \sum_{i=1}^{K} \exp(\phi(f_k^-) \cdot g_{q1} \cdot f_k^-/\tau)}. (10)$$

where $L_{WeightedNCE}$ denotes the complete weight loss function. The first image encoder, the second image encoder, and the third image encoder are trained according to the complete weight loss function.

In some embodiments, in step 909 above, "update the third image encoder based on the first image encoder" may be replaced with "update parameters of a third image encoder by using pre-determined weights and model parameters shared between the first image encoder and the second image encoder ", that is, $\theta$ in the formula (8) in step 909 denotes the model parameter shared between the first image encoder and the second image encoder. The third image encoder is slowly updated through the model parameter shared between the first image encoder and the second image encoder.

Based on the above, in the above solution, two sample triples (a first image, a third image, and a plurality of second sample tissue images) and (a second image, a third image, and a plurality of second sample tissue images) are constructed, where the first image is the anchor image 1, and the second image is the anchor image 2, which further improves the encoding effect of the trained image encoder, and makes the constructed complete weight loss function more robust than the first weight loss function or the second weight loss function.

**Related content of complete loss function -- 1-3:**

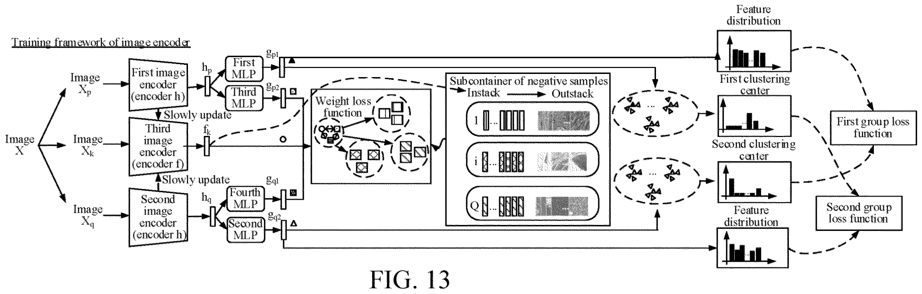

From FIG. 3 to FIG. 7 above, the third image encoder may be trained through a group loss function. From FIG. 8 to FIG. 12 above, the third image encoder may be trained through a weight loss function. In an exemplary embodiment, the third image encoder may be trained jointly by the group loss function and the weight loss function. Refer to FIG. 13 which is a schematic diagram of training architecture of an image encoder according to an exemplary embodiment of this disclosure.

*Related content of group loss function:*

Data enhancement is performed on an image X to obtain an image $X_p$, the image $X_p$ passes through an encoder h to obtain a first intermediate feature vector $h_p$, and the first intermediate feature vector $h_p$ passes through the first MLP to obtain a first feature vector $g_{p1}$; and data enhancement is performed on the image X to obtain an image $X_q$, the image $X_q$ passes through the encoder h to obtain a second intermediate feature vector $h_q$, and the second intermediate feature vector $h_q$ passes through the second MLP to obtain a second feature vector $g_{q2}$. In a same training batch, first feature vectors $g_{p1}$ respectively corresponding to a plurality of first sample tissue images are clustered to obtain a plurality of first clustering centers. One of the first clustering centers that is closest to the second feature vector $g_{q2}$ of one first sample tissue image is determined to be a positive sample vector. The remaining feature vectors of the plurality of first clustering centers are determined to be negative sample vectors. A subfunction used for representing an error between the positive sample vector and the anchor vector is constructed based on the positive sample vector and the second feature vector $g_{q2}$. A subfunction used for representing an error between the negative sample vectors and the anchor vector is constructed based on the negative sample vectors and the second feature vector $g_{q2}$. The two subfunctions are combined to form a first group loss function. In a same training batch, second feature vectors $g_{q2}$ respectively corresponding to a plurality of first sample tissue images are clustered to obtain a plurality of second clustering centers. One of the second clustering centers that is closest to the first feature vector $g_{p1}$ of one first sample tissue image is determined to be a positive sample vector. The remaining feature vectors of the plurality of second clustering centers are determined to be negative sample vectors. A subfunction used for representing an error between the positive sample vector and the anchor vector is constructed based on the positive sample vector and the first feature vector $g_{p1}$. A subfunction used for representing an error between the negative sample vectors and the anchor vector is constructed based on the negative sample vectors and the first feature vector $g_{p1}$. The two subfunctions are combined to form a second group loss function. The first image encoder and the second image encoder are trained according to a group loss function obtained by combining the first group loss function and the second group loss function. The third image encoder is updated according to the first image encoder and the second image encoder.

*Related content of weight loss function:*

Data enhancement is performed on the image X to obtain an image $X_k$, and the image $X_k$ passes through the encoder f to obtain a third feature vector $f_k$; data enhancement is performed on the image X to obtain an image $X_p$, the image $X_p$ passes through the encoder h to obtain a first intermediate feature vector $h_p$, and the first intermediate feature vector $h_p$ passes through the third MLP to obtain a fourth feature vector $g_{p2}$; and data enhancement is performed on the image X to obtain an image $X_q$, the image $X_q$ passes through the encoder h to obtain a second intermediate feature vector $h_q$, and the second intermediate feature vector $h_q$ passes through the fourth MLP to obtain a fifth feature vector $g_{p1}$. A plurality of second sample tissue images are inputted into the encoder f and put into a storage queue through a stack operation, and in the storage queue, negative sample feature vectors in the queue are clustered into Q categories by K-means clustering, thereby constructing Q subqueues. A weight is assigned to each clustering center based on a similarity value between the clustering center and $f_k$.

A subfunction used for representing the negative sample and the anchor image is constructed based on Q clustering centers and the fourth feature vector $g_{p2}$. A subfunction used for representing the positive sample and the anchor image is constructed based on the third feature vector $f_k$ and the fourth feature vector $g_{p2}$. The two subfunctions are combined to form a first weight loss function. A subfunction used for representing the negative sample and the anchor image is constructed based on the Q clustering centers and the fifth feature vector $g_{p1}$. A subfunction used for representing the positive sample and the anchor image is constructed based on the third feature vector $f_k$ and the fifth feature vector $g_{p1}$. The two subfunctions are combined to form a second weight loss function. The first image encoder, the second image encoder, and the third image encoder are trained based on a weight loss function obtained by combining the first weight loss function and the second weight loss function, and the parameter of the third image encoder is slowly updated through a model parameter shared by the first image encoder and the second image encoder.

*Combine related content of weight loss function and group loss function:*

It may be understood that the image encoder is trained based on the weight loss function and based on the group loss function, and both determine similarity values based on clustering and reassign positive and negative sample hypotheses. The above weight loss function is used for correcting positive and negative sample hypotheses of negative samples in the related technology, and the above group loss function is used for correcting positive and negative sample hypotheses of positive samples in the related technology.

In the training architecture shown in FIG. 13, the weight loss function and the group loss function are combined through hyperparameters, expressed as:

$$\mathcal{L} = \mathcal{L}_{WeightedNCE} + \lambda \mathcal{L}_{GroupNCE}; \quad (11)$$

where $\mathcal{L}$ on the left of the formula (11) denotes a final loss function, $\mathcal{L}_{WeightedNCE}$ denotes the weight loss function, $L_{GroupNCE}$ denotes the group loss function, and $\lambda$ serves as a hyperparameter to adjust contributions of the two loss functions.

Based on the above, the final loss function is jointly constructed by the weight loss function and the group loss function. Compared with a single weight loss function or a single group loss function, the final loss function will be more robust, the final trained image encoder will have a better good encoding effect, and features of a small image extracted by the image encoder can better represent the small image.

**Image encoder using stage -- 2:**

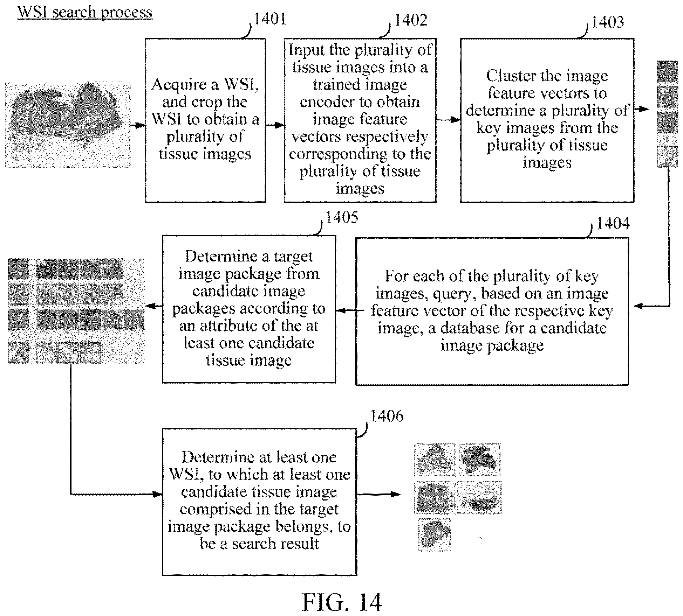

The image encoder using stage will be introduced below. In an embodiment provided in this disclosure, the image encoder is used for a WSI image search scenario. FIG. 14 is a flowchart of a WSI search method according to an exemplary embodiment of this disclosure. For example, the method is applied to the image encoder using device 22 shown in FIG. 1. In this case, the image encoder using device 22 may alternatively be called a WSI search device.

**Step 1401:** Acquire a WSI, and crop the WSI to obtain a plurality of tissue images.

For the WSI, the WSI is a visual digital image created by using a digital scanner to scan a traditional pathological film to collect high-resolution images and then using a computer to seamlessly stitch collected fragmented images. In this disclosure, the WSI is generally referred to as a large image. The tissue images refer to local tissue regions within the WSI. In this disclosure, the tissue images are generally referred to as small images. In an embodiment, at a preprocessing stage of the WSI, a foreground tissue region in the WSI is extracted through a threshold technology, and then the foreground tissue region in the WSI is cropped into a plurality of tissue images based on a sliding window technology.

**Step 1402:** Input the plurality of tissue images into a trained image encoder to obtain image feature vectors respectively corresponding to the plurality of tissue images.

In an embodiment, the second image encoder trained by the method embodiment shown in FIG. 4 above generates the image feature vectors respectively corresponding to the plurality of tissue images. In this case, the second image encoder is trained based on a first group loss function. Alternatively, the first image encoder (or the second image encoder) trained by the method embodiment shown in FIG. 7 above generates the image feature vectors respectively corresponding to the plurality of tissue images. In this case, the first image encoder (or the second image encoder) is trained based on the first group loss function and a second group loss function. Alternatively, the third image encoder trained by the method embodiment shown in FIG. 9 above generates the image feature vectors respectively corresponding to the plurality of tissue images. In this case, the third image encoder is trained based on a first weight loss function. Alternatively, the third image encoder trained by the method embodiment shown in FIG. 12 above generates the image feature vectors respectively corresponding to the plurality of tissue images. In this case, the third image encoder is trained based on the first weight loss function and a second weight loss function. Alternatively, the third image encoder trained by the embodiment shown in FIG. 13 above generates the image feature vectors respectively corresponding to the plurality of tissue images. In this case, the third image encoder is trained based on a group loss function and a weight loss function.

**Step 1403:** Cluster the image feature vectors to determine a plurality of key images from the plurality of tissue images.

In an embodiment, the image feature vectors respectively corresponding to the plurality of tissue images are clustered to obtain a plurality of first class clusters; and clustering centers respectively corresponding to the plurality of first class clusters are determined to be image feature vectors respectively corresponding to the plurality of key images. Schematically, the key image is a tissue image corresponding to the clustering center of each first class cluster. In another embodiment, the image feature vectors respectively corresponding to the plurality of tissue images are clustered to obtain a plurality of first class clusters, and then the plurality of first class clusters are re-clustered. For an $n^{th}$ first class cluster in the plurality of first class clusters, position features of WSIs to which a plurality of tissue images corresponding to the $n^{th}$ first class cluster respectively belong are clustered to obtain a plurality of second class clusters. For the $n^{th}$ first class cluster in the plurality of first class clusters, clustering centers respectively corresponding to the plurality of second class clusters included in the $n^{th}$ first class cluster are determined to be the image feature vectors respectively corresponding to the plurality of key images. The $n^{th}$ first class cluster is any one of the plurality of first class clusters, where n is a positive integer.

Schematically, the clustering is performed by K-means clustering. In first clustering, a plurality of image feature vectors $f_{all}$ will be clustered to obtain $K_1$ different categories, expressed as $F_i$, $i$ = 1,2, ..., $K_1$, where $K_1$ is a positive integer. In second clustering, within each class cluster $F_i$, spatial coordinate information of the plurality of tissue images is taken as features and further clustered into $K_2$ categories, where $K_2$ = $round(R \cdot N)$, and $R$ denotes a scale parameter. In some embodiments, R is 20%. N denotes a quantity of small images in the class cluster $F_i$. Based on the above two-fold clustering, $K_1*K_2$ clustering centers will eventually be obtained, and tissue images corresponding to the $K_1*K_2$ clustering centers are taken as $K_1*K_2$ key images. Moreover, the $K_1*K_2$ key images are taken as a global representation of the WSI, where $K_2$ is a positive integer. In some embodiments, the key images are generally called mosaic images.

**Step 1404:** For each of the plurality of key images, query, based on an image feature vector of the respective key image, a database for a candidate image package.

The candidate image package includes at least one candidate tissue image.

According to step 1404 above, $WSI = \{P_1, P_2, ..., P_i, ..., P_k\}$, where $P_i$ and k represent a feature vector of an $i^{th}$ key image and a total number of the key images within the WSI, and i and k are both positive integers. In the search for the WSI, each key image will be taken as a query image one by one to generate a candidate image package, and a total of k candidate image packages are generated, expressed as $Bag = \{\mathbb{B}_1, \mathbb{B}_2, ..., \mathbb{B}_i, ..., \mathbb{B}_k\}$, where an $i^{th}$ candidate image package is $\mathbb{B}_i = \{b_{i1}, b_{i2}, ..., b_{ij}, ..., b_{it}\}$, and t represent a $j^{th}$ candidate tissue image and a total number of candidate tissue images within $\mathbb{B}_i$, and j is a positive integer.

**Step 1405:** Determine a target image package from candidate image packages according to an attribute of the at least one candidate tissue image.

Schematically, the attribute of the candidate image package refers to an image attribute corresponding to a key image in the image package. In some embodiments, the image attribute includes an image similarity between the key image and the WSI, or the image attribute includes a diagnostic category corresponding to the key image.

According to step 1405 above, a total of k candidate image packages are generated. To speed up the search for the WSI and optimize a search result, the k candidate image packages need to be further selected. In an embodiment, the k candidate image packages are selected according to similarities between the candidate image packages and the WSI and/or diagnostic categories in the candidate image packages, to obtain a target image package. A specific selecting step will be introduced in detail below.

**Step 1406:** Determine at least one WSI, to which at least one candidate tissue image comprised in the target image package belongs, to be a search result.

After a plurality of selected image packages are selected out, WSIs, to which at least one candidate tissue image in the selected image package respectively belongs, to be search results. In some embodiments, the at least one candidate tissue image in the selected image package may be from a same WSI or from a plurality of different WSIs.

Based on the above, firstly, the WSI is cropped into a plurality of small images, and the plurality of small images pass through an image encoder to obtain image feature vectors respectively corresponding to the plurality of small images. That is, a plurality of image feature vectors are obtained. Then, the plurality of image feature vectors are clustered, and small images corresponding to clustering centers are taken as key images. Next, each key image is queried for, to obtain a candidate image package. Then, the candidate image package is selected to obtain a target image package. Finally, WSIs corresponding to at least one small image in the candidate image package are taken as search results. The method provides a manner of searching for a WSI (a large image) with a WSI (a large image), and the clustering step and the selecting step mentioned therein can greatly reduce an amount of data processed and improve search efficiency. Moreover, the manner of searching for a WSI (a large image) with a WSI (a large image) provided in this embodiment does not require a training process and can achieve fast search and matching.

In addition, after the image feature vectors respectively corresponding to the plurality of tissue images are clustered, image feature vectors corresponding to at least one key image are determined from clustering centers respectively corresponding to the plurality of first class clusters obtained, which can prevent selecting of an image feature vector corresponding to each tissue image, thereby reducing a selecting workload, can improve accuracy of extraction of the image feature vectors, and can also improve search efficiency. Moreover, position features of WSIs to which a plurality of tissue images corresponding to a first class cluster respectively belong are clustered to obtain a plurality of second class clusters, so as to determine clustering centers respectively corresponding to the plurality of second class clusters included in the first class cluster to be the image feature vectors of the key image. That is, the image feature vector obtained by two-fold clustering can improve accuracy of feature extraction.

Based on the exemplary embodiment shown in FIG. 14, step 1405 may be replaced with 1405-1.

**1405-1:** Select, according to a quantity of diagnostic categories corresponding to candidate images in each of the candidate image packages, at least one candidate image package from the candidate image packages, as the target image package.

In an embodiment, for each candidate image package, an entropy value of the respective candidate image package is calculated, according to a cosine similarity between at least one candidate tissue image in the respective candidate image package and a key image corresponding to the respective candidate image package, a probability of occurrence of at least one diagnostic category in the database, and a diagnostic category of the at least one candidate tissue image, wherein the entropy value is used for measuring a quantity of diagnostic categories corresponding to the respective candidate image package, and the first candidate image package is any one of the candidate image packages. Finally, the at least one candidate image package is selected to obtain the target image package, of which the entropy value is lower than an entropy threshold. Schematically, a calculation formula for the entropy value is as follows:

$$Ent_i = -\sum_{m=1}^{u_i} p_m \cdot \log(p_m); (12)$$

where $Ent_i$ represents an entropy value of an $i^{th}$ candidate image package, $u_i$ represents a total number of diagnostic categories within the $i^{th}$ candidate image package, $p_m$ represents a probability of occurrence of an $m^{th}$ diagnostic category within the $i^{th}$ candidate image package, and m is a positive integer. It may be understood that the entropy value is used for represent a degree of uncertainty of the $i^{th}$ candidate image package. A greater entropy value indicates higher uncertainty of the $i^{th}$ candidate image package and more disordered distribution of candidate tissue images in the $i^{th}$ candidate image package in terms of diagnostic category dimensions. That is, higher uncertainty of an $i^{th}$ key image indicates that the $i^{th}$ key image is less capable of being used for representing the WSI. If a plurality of candidate tissue images in the $i^{th}$ candidate image package have a same diagnosis result, the entropy value of the candidate image package will be 0, and the $i^{th}$ key image achieves an optimal effect of representing the WSI.

In the formula (13), $p_m$ is calculated as follows:

$$p_m = \frac{\sum_{j=1}^{t} \delta(y_j, m) \cdot w_{y_j} \cdot (d_j+1)/2}{\sum_{j=1}^{t} w_{y_j} \cdot (d_j+1)/2}; (13)$$

where $y_j$ represents a diagnostic category of a $j^{th}$ candidate tissue image in the $i^{th}$ candidate image package; $\delta()$ denotes a discriminant function and is used for determining whether the diagnostic category of the $j^{th}$ candidate tissue image is consistent with the $m^{th}$ diagnostic category, outputting 1 if yes, and outputting 0 if not; $w_{y_j}$ denotes a weight of the $j^{th}$ candidate tissue image; $w_{yj}$ is calculated according to the probability of occurrence of the at least one diagnostic category in the database; $d_j$ represents a cosine similarity between the $j^{th}$ candidate tissue image in the $i^{th}$ candidate image package and the $i^{th}$ key image, and $(d_j + 1)/2$ is used for ensuring a value range from 0 to 1. For ease of understanding, in the formula (13), $w_{y_j} \cdot (d_j + 1)/2$ may be regarded as a weight score $v_j$ used for representing the $j^{th}$ candidate tissue image in the $i^{th}$ candidate image package. A denominator of the formula (13) represents a total score of the $i^{th}$ candidate image package, and a numerator of the formula (13) represents a sum of scores of the $m^{th}$ diagnostic category in the $i^{th}$ candidate image package. Through the formula (12) and the formula (13) above, the at least one candidate image package can be selected, candidate image packages whose entropy values are lower than a preset entropy threshold are eliminated, and a plurality of selected image packages can be selected out from the at least one candidate image package, expressed as $Bag = \{\mathbb{B}_1, \mathbb{B}_2, ..., \mathbb{B}_i, ..., \mathbb{B}_{k'}\}$, where $k'$ denotes a quantity of the plurality of selected image packages, and $k'$ is a positive integer. That is, a target image package is determined from the candidate image packages in at least two manners: according to a quantity of diagnostic categories that the candidate image packages have and according to similarities between image features in the candidate image packages and an image feature of the key image. Therefore, according to the embodiments of this disclosure, diversity of determination manners of the search results is enriched, and the accuracy of the search results are further improved. On the one hand, when a candidate target image package is determined according to the quantity of diagnostic categories that the candidate image packages have, the candidate image packages are selected through the diagnostic categories, which is more in line with an actual situation. Furthermore, entropy values corresponding to the candidate image packages are determined from a plurality of dimensions according to the diagnostic categories, so as to select out the target image package more intuitively. On the other hand, when the target image package is determined according to the similarities between the image features in the candidate image packages and the image feature of the key image, cosine similarities between candidate tissue images in the candidate image packages and the key image are calculated respectively, first m cosine similarity values are taken to determine an average value, and the target image package is selected out according to the average value, which considers a cosine similarity of a single feature and also considers m similarities comprehensively. Therefore, the solution has better fault tolerance.

Based on the above, the candidate image packages whose entropy values are lower than the preset entropy threshold are eliminated, so as to select out the candidate image packages with higher stability, which further reduces an amount of data processed during the search for a WSI with a WSI and can improve search efficiency.

Based on the exemplary embodiment shown in FIG. 14, step 1405 may be replaced with 1405-2.

**1405-2:** Select the at least one candidate image package, according to a similarity between the at least one candidate tissue image and a key image corresponding to the at least one candidate image package, as the target image package.

Schematically, the similarity refers to a cosine similarity value between one of the at least one candidate tissue images and one of the plurality of key images.

In an embodiment, for each candidate image package, a plurality of candidate tissue images in the respective candidate image package are arranged according to a descending order of cosine similarities respectively between the plurality of candidate tissue images and a key image corresponding to the respective candidate image package; first m candidate tissue images of the first candidate image package are acquired based on the arrangement, m is a positive integer; an average value of the cosine similarities respectively corresponding to the first m candidate tissue images is determined to be a first average value; and a candidate image package in which an average value of cosine similarities of candidate tissue images comprised is greater than the first average value is determined to be the selected image package, to obtain the target image package, where m is a positive integer. Schematically, the at least one candidate image package is expressed as $Bag = \{\mathbb{B}_1, \mathbb{B}_2, ..., \mathbb{B}_i, ..., \mathbb{B}_k\}$, the candidate tissue images in each candidate image package are arranged in descending order of cosine similarities, and the first average value may be expressed as:

$$\eta = \frac{1}{k}\sum_{i=1}^{k} AveTop(\mathbb{B}_i); \quad (14)$$

where $\mathbb{B}_i$ and $k$ represent a total number of an $i^{th}$ candidate image package and a total number of the at least one candidate image package respectively, AveTop denotes an average value of first m cosine similarities in the $i^{th}$ candidate image package, $\eta$ denotes the first average value, $\eta$ is taken as an evaluation criterion to delete candidate image packages whose average cosine similarities are less than $\eta$, and then the target image package may be obtained. The target image package is expressed as: $ag = \{\mathbb{B}_1, \mathbb{B}_2, ..., \mathbb{B}_i, ..., \mathbb{B}_{k''}\}$, $\mathbb{B}_i$, and $k''$ represent a total number of an $i^{th}$ selected image package and a total number of the target image package respectively, and $k''$ is a positive integer.

Based on the above, the candidate image packages whose similarities to the key image are lower than the first average value are eliminated, so as to select out the candidate image package in which candidate tissue images have higher similarities to the key image, which further reduces an amount of data processed during the search for a WSI with a WSI and can improve search efficiency.

1405-1 and 1405-2 above may perform the step of selecting at least one candidate image package separately, or may jointly perform the step of selecting at least one candidate image package. In this case, 1405-1 may be performed prior to 1405-2, or 1405-2 may be performed prior to 1405-1, which is not limited in this disclosure.

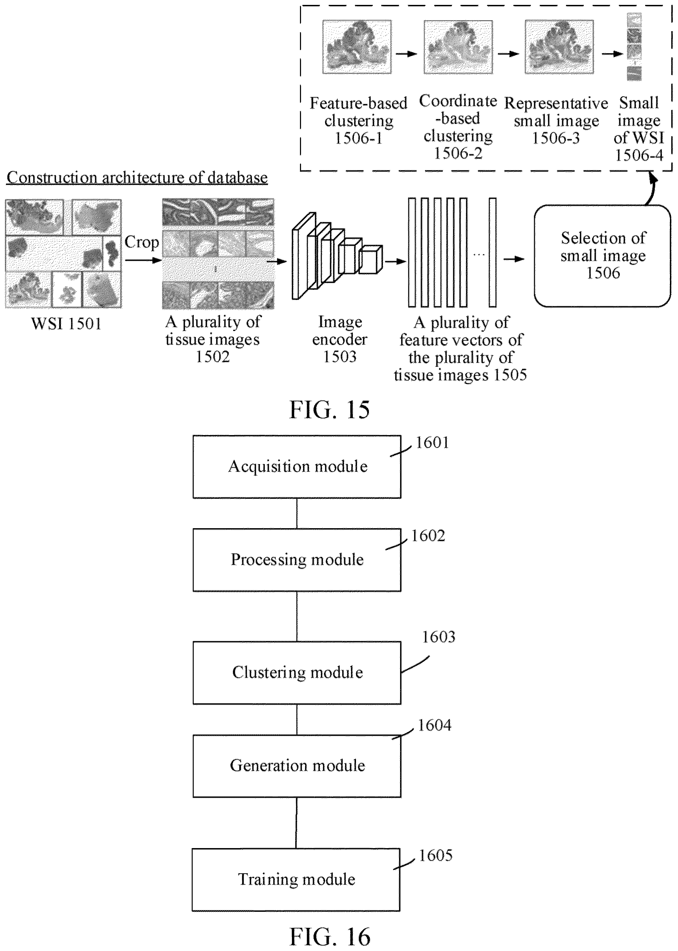

Based on the method embodiment shown in FIG. 14, step 1404 involves querying the database for the candidate image package. Next, a construction process of the database will be introduced. Refer to FIG. 15 which is a schematic diagram of construction architecture of a database according to an exemplary embodiment of this disclosure. The method is performed by an image encoder using device or another computer device other than the image encoder using device, which is not limited in this disclosure.

**Take a WSI for example:** Firstly, a WSI 1501 is cropped into a plurality of tissue images 1502. In some embodiments, a cropping method includes: at a preprocessing stage of the WSI, extracting a foreground tissue region in the WSI through a threshold technology, and then cropping the foreground tissue region in the WSI into a plurality of tissue images based on a sliding window technology. Then, the plurality of tissue images 1502 are inputted into an image encoder 1503, and feature extraction is performed on the plurality of tissue images 1502 to obtain image feature vectors 1505 respectively corresponding to the plurality of tissue images. Finally, the plurality of tissue images 1502 are selected (that is, selection of small images 1506) based on the image feature vectors 1505 respectively corresponding to the plurality of tissue images. In some embodiments, the selection of the small images 1506 includes two-fold clustering. The first clustering is feature-based clustering 1506-1, and the second clustering is coordinate-based clustering 1506-2.

In the feature-based clustering 1506-1, the image feature vectors 1505 respectively corresponding to the plurality of tissue images are clustered into $K_1$ categories by K-means clustering, and $K_1$ clustering centers are correspondingly obtained. FIG. 15 shows a small image corresponding to one clustering center. In the coordinate-based clustering 1506-2, for any one of the $K_1$ categories, respective feature vectors included in the category are clustered into $K_2$ categories by K-means clustering, and $K_2$ clustering centers are correspondingly obtained. FIG. 15 shows a small image corresponding to one clustering center. Small images corresponding to $K_1*K_2$ clustering centers obtained by two-fold clustering are taken as a representative small image 1506-3. FIG. 15 shows a small image corresponding to one clustering center. All representative small images are taken as small images of the WSI to represent the WSI. Based on this, a plurality of small images of one WSI are constructed.

In an exemplary embodiment, the training idea of the image encoder above is also applicable to other image fields. Through sample starfield images (small images), the starfield images are from a starry sky image (a large image), and the starfield images indicate local regions in the starry sky image. For example, the starry sky image is an image of the starry sky in a first range, and the starfield images are images in sub-ranges within the first range.

**An image encoder training stage includes:** acquiring a first sample starfield image; performing data enhancement on the first sample starfield image to obtain a first image; inputting the first image into a first image encoder to obtain a first feature vector; performing data enhancement on the first sample starfield image to obtain a second image, the first image being different from the second image; inputting the second image into a second image encoder to obtain a second feature vector; determining the first feature vector to be a contrast vector for contrast learning, and determining the second feature vector to be an anchor vector for the contrast learning; clustering first feature vectors respectively corresponding to different first sample starfield images to obtain a plurality of first clustering centers; determining the first feature vector in the plurality of first clustering centers that has a maximum similarity value with the second feature vector to be a positive sample vector in a plurality of first feature vectors; determining the remaining first feature vectors to be negative sample vectors in a plurality of first feature vectors, where the remaining first feature vectors refer to feature vectors in the plurality of first feature vectors other than the first feature vector that has a maximum similarity value with the second feature vector; generating a first subfunction based on the second feature vector and the positive sample vector in the plurality of first feature vectors; generating a second subfunction based on the second feature vector and the negative sample vectors in the plurality of first feature vectors; generating a first group loss function based on the first subfunction and the second subfunction; and training the first image encoder and the second image encoder based on the first group loss function; and determining the second image encoder to be an image encoder finally obtained by training. Similarly, other training methods similar to the image encoder of the sample tissue images above may also be adopted for the image encoder of the starfield images, which are not described in detail herein.

**An image encoder using stage includes:** acquiring a starry sky image, and cropping the starry sky image into a plurality of starfield images; generating, through an image encoder, image feature vectors respectively corresponding to the plurality of starfield images; clustering the image feature vectors respectively corresponding to the plurality of starfield images, and determining at least one key image from the plurality of starfield images; querying, based on image feature vectors respectively corresponding to the at least one key image, a database for at least one candidate image package respectively corresponding to the at least one key image, the candidate image package including at least one candidate starfield image; determining target image package from the at least one candidate image package according to attributes of the at least one candidate image package; and determining starry sky images, to which at least one candidate starfield image included in the target image package respectively belongs, to be search results.

In another exemplary embodiment, the training idea of the image encoder above is also applicable to the field of geographical images. The image encoder is trained through sample terrain images (small images), and the terrain images are from a landform image (a large image). The terrain images indicate local regions in the landform image. For example, the landform image is an image of a landform captured by a satellite, and the terrain images are images in sub-ranges within the second range.

**An image encoder training stage includes:** acquiring a first sample terrain image; performing data enhancement on the first sample terrain image to obtain a first image; inputting the first image into a first image encoder to obtain a first feature vector; performing data enhancement on the first sample terrain image to obtain a second image; inputting the second image into a second image encoder to obtain a second feature vector; determining the first feature vector to be a contrast vector for contrast learning, and determining the second feature vector to be an anchor vector for the contrast learning; clustering first feature vectors respectively corresponding to different first sample terrain image images to obtain a plurality of first clustering centers; determining the first feature vector in the plurality of first clustering centers that has a maximum similarity value with the second feature vector to be a positive sample vector in a plurality of first feature vectors; determining the remaining first feature vectors to be negative sample vectors in a plurality of first feature vectors, where the remaining first feature vectors refer to feature vectors in the plurality of first feature vectors other than the first feature vector that has a maximum similarity value with the second feature vector; generating a first subfunction based on the second feature vector and the positive sample vector in the plurality of first feature vectors; generating a second subfunction based on the second feature vector and the negative sample vectors in the plurality of first feature vectors; generating a first group loss function based on the first subfunction and the second subfunction; and training the first image encoder and the second image encoder based on the first group loss function; and determining the second image encoder to be an image encoder finally obtained by training. Similarly, other training methods similar to the image encoder of the sample tissue images above may also be adopted for the image encoder of the terrain images, which are not described in detail herein.

**An image encoder using stage includes:** acquiring a landform image, and cropping the landform image into a plurality of terrain images; generating, through an image encoder, image feature vectors respectively corresponding to the plurality of terrain images; clustering the image feature vectors respectively corresponding to the plurality of terrain images, and determining at least one key image from the plurality of terrain images; querying, based on image feature vectors respectively corresponding to the at least one key image, a database for at least one candidate image package respectively corresponding to the at least one key image, the candidate image package including at least one candidate terrain image; determining a target image package from the at least one candidate image package according to attributes of the at least one candidate image package; and determining landform images, to which at least one candidate terrain image included in the target image package respectively belongs, to be search results.

FIG. 16 is a structural block diagram of an image encoder training apparatus according to an exemplary embodiment of this disclosure. The apparatus includes:

an acquisition module 1601 configured to acquire a first sample tissue image;

a processing module 1602 configured to perform first data enhancement on the first sample tissue image using a first enhancement parameter to obtain a first image; input the first image into a first image encoder to obtain a first feature vector, the first feature vector being used as a contrast vector for contrast learning;

the processing module 1602 being further configured to perform second data enhancement on the first sample tissue image using a second enhancement parameter to obtain a second image, the second enhancement parameter being different from the first enhancement parameter; input the second image into a second image encoder to obtain a second feature vector, the second feature vector being used as an anchor vector for the contrast learning;

a clustering module 1603 configured to cluster first feature vectors respectively corresponding to different first sample tissue images to obtain a plurality of first clustering centers, each of the plurality of first clustering centers being represented by a first feature vector; determine a first feature vector in the plurality of first clustering centers that has a maximum similarity value with the second feature vector to be a first positive sample vector; determine first feature vectors in the plurality of first feature vectors other than the first positive sample vector to be first negative sample vectors;

a generation module 1604 configured to generate a first subfunction based on the second feature vector and the first positive sample vector in the plurality of first feature vectors; generate a second subfunction based on the second feature vector and the first negative sample vectors in the plurality of first feature vectors; and generate a first group loss function based on the first subfunction and the second subfunction; and

a training module 1605 configured to train the first image encoder and the second image encoder simultaneously by using the first group loss function; and determine the trained second image encoder to be an image encoder obtained by training.

In an exemplary embodiment, the processing module 1602 is further configured to input the first image into the first image encoder to obtain a first intermediate feature vector; and input the first intermediate feature vector into a first MLP to obtain the first feature vector.

In an exemplary embodiment, the processing module 1602 is further configured to input the second image into the second image encoder to obtain a second intermediate feature vector; and input the second intermediate feature vector into a second MLP to obtain the second feature vector.

In an exemplary embodiment, the second feature vector is used as a contrast vector for the contrast learning, and the first feature vector is used as an anchor vector for the contrast learning.

The clustering module 1603 is further configured to cluster second feature vectors respectively corresponding to different first sample tissue images to obtain a plurality of second clustering centers; determine the second feature vector in the plurality of second clustering centers that has a maximum similarity value with the first feature vector to be a second positive sample vector; determine the second feature vectors in the plurality of second feature vectors other than the second positive sample vector to be second negative sample vectors.

In an exemplary embodiment, the generation module 1604 is further configured to generate a third subfunction based on the first feature vector and the second positive sample vector; generate a fourth subfunction based on the first feature vector and the second negative sample vectors; generate a second group loss function based on the third subfunction and the fourth subfunction;.

In an exemplary embodiment, the training module 1605 is further configured to train the first image encoder and the second image encoder simultaneously by using the second group loss function; and determine the trained first image encoder to be a final image encoder obtained by training.

In an exemplary embodiment, the training module 1605 is further configured to update parameters of a third image encoder by using pre-determined weights and model parameters shared between the first image encoder and the second image encoder, the third image encoder being different from the first image encoder and the second image encoder.

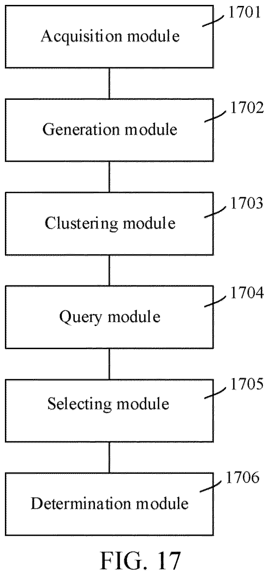

FIG. 17 is a structural block diagram of a WSI search apparatus according to an exemplary embodiment of this disclosure. The apparatus includes:

an acquisition module 1701 configured to acquire a WSI, and crop the WSI to obtain a plurality of tissue images;

a generation module 1702 configured to input the plurality of tissue images into a trained image encoder to obtain image feature vectors respectively corresponding to the plurality of tissue images;

a clustering module 1703 configured to cluster the image feature vectors to determine a plurality of key images from the plurality of tissue images;

a query module 1704 configured to for each of the plurality of key images, query, based on an image feature vector of the respective key image, a database for a candidate image package, the candidate image package comprising at least one candidate tissue image;

a selecting module 1705 configured to determine a target image package from candidate image packages according to an attribute of the at least one candidate tissue image; and

a determination module 1706 configured to determine at least one WSI, to which at least one candidate tissue image comprised in the target image package belongs, to be a search result.

In an exemplary embodiment, the clustering module 1703 is further configured to cluster the image feature vectors to obtain a plurality of first class clusters; and determine clustering centers respectively corresponding to the plurality of first class clusters to be image feature vectors respectively corresponding to the plurality of key images.

In an exemplary embodiment, the clustering module 1703 is further configured to cluster, for an $n^{th}$ first class cluster in the plurality of first class clusters, position features of WSIs to which a plurality of tissue images corresponding to the $n^{th}$ first class cluster respectively belong, to obtain a plurality of second class clusters, n is a positive integer; and determine, for the $n^{th}$ first class cluster in the plurality of first class clusters, clustering centers respectively corresponding to the plurality of second class clusters to be the image feature vectors respectively corresponding to the plurality of key images.

In an exemplary embodiment, the selecting module 1705 is further configured to select, according to a quantity of diagnostic categories corresponding to candidate images in each of the candidate image packages, at least one candidate image package from the candidate image packages, as the target image package.

In an exemplary embodiment, the selecting module 1705 is further configured to for each candidate image package, calculate an entropy value of the respective candidate image package, according to a cosine similarity between at least one candidate tissue image in the respective candidate image package and a key image corresponding to the respective candidate image package, a probability of occurrence of at least one diagnostic category in the database, and a diagnostic category of the at least one candidate tissue image, wherein the entropy value is used for measuring a quantity of diagnostic categories corresponding to the respective candidate image package; and select the at least one candidate image package of which the entropy value is lower than an entropy threshold, as the target image package.

In an exemplary embodiment, the selecting module 1705 is further configured to select the at least one candidate image package, according to a similarity between the at least one candidate tissue image and a key image corresponding to the at least one candidate image package, as the target image package.

In an exemplary embodiment, the selecting module 1705 is further configured to for each candidate image package, arrange a plurality of candidate tissue images in the respective candidate image package according to a descending order of cosine similarities respectively between the plurality of candidate tissue images and a key image corresponding to the respective candidate image package; acquire first m candidate tissue images of the first candidate image package based on the arrangement, m is a positive integer; determine an average value of the cosine similarities respectively corresponding to the first m candidate tissue images to be a first average value; and determine a candidate image package in which an average value of cosine similarities of candidate tissue images comprised is greater than the first average value as the target image package.

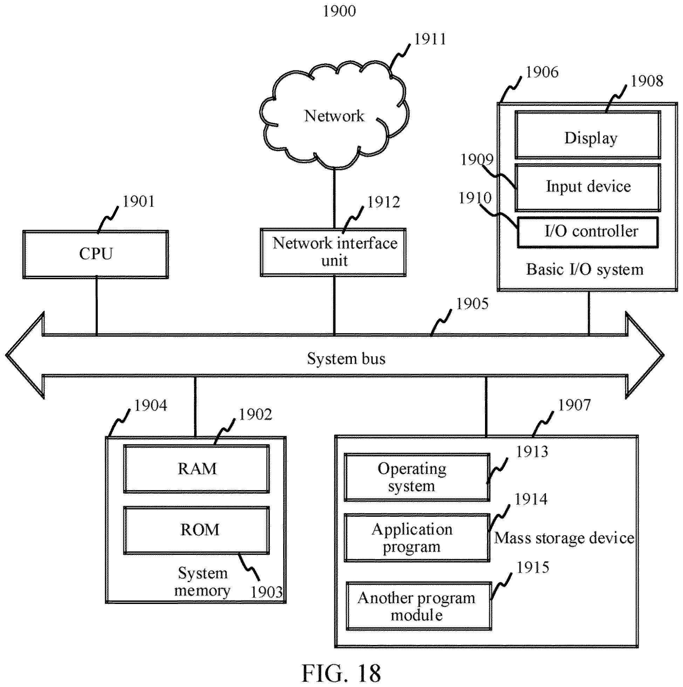

FIG. 18 is a schematic structural diagram of a computer device according to an exemplary embodiment. The computer device 1900 may be the image encoder training device 21 in FIG. 2 or the image encoder using device 22 in FIG. 2. The computer device 1900 includes a central processing unit (CPU) 1901, a system memory 1904 including a random access memory (RAM) 1902 and a read-only memory (ROM) 1903, and a system bus 1905 connecting the system memory 1904 to the CPU 1901. The computer device 1900 further includes a basic input/output (I/O) system 1906 assisting in transmitting information between components in the computer device, and a mass storage device 1907 configured to store an operating system 1913, an application program 1914, and another program module 1915.

The basic I/O system 1906 includes a display 1908 configured to display information and an input device 1909 such as a mouse or a keyboard that is configured to enter information by a user. The display 1908 and the input device 1909 are both connected to the CPU 1901 by using an I/O controller 1910 connected to the system bus 1905. The basic I/O system 1906 may further include the I/O controller 1910 to receive and process inputs from a plurality of other devices such as a keyboard, a mouse, and an electronic stylus. Similarly, the I/O controller 1910 further provides an output to a display screen, a printer, or another type of output device.

The mass storage device 1907 is connected to the CPU 1901 by using a mass storage controller (not shown) connected to the system bus 1905. The mass storage device 1907 and a computer device-readable medium associated therewith provide non-volatile storage for the computer device 1900. That is, the mass storage device 1907 may include a computer device-readable medium (not shown) such as a hard disk or a compact disc ROM (CD-ROM) drive.

In general, the computer device-readable medium may include a computer device storage medium and a communications medium. The computer device storage medium includes volatile and non-volatile media, and removable and non-removable media implemented by using any method or technology used for storing information such as computer device-readable instructions, data structures, program modules, or other data. The computer device storage medium includes a RAM, a ROM, an erasable programmable ROM (EPROM), an electrically erasable programmable ROM (EEPROM), a CD-ROM, a digital versatile disc (DVD) or another optical memory, a tape cartridge, a magnetic cassette, a magnetic disk memory, or another magnetic storage device. A person skilled in the art may learn that the computer device storage medium is not limited to the foregoing several types. The system memory 1904 and the mass storage device 1907 may be collectively referred to as a memory.

According to the embodiments of this disclosure, the computer device 1900 may further be connected, through a network such as the Internet, to a remote computer device on the network and run. That is, the computer device 1900 may be connected to a network 1911 by using a network interface unit 1912 connected to the system bus 1905, or may be connected to another type of network or a remote computer device system (not shown) by using a network interface unit 1912.

The memory further includes one or more programs. The one or more programs are stored in a memory. The CPU 1901 implements all or some steps of the image encoder training method above by executing the one or more programs.

**Claims**

1. An image encoder training method, executable by a computer device, and the method comprising:

   acquiring a first sample tissue image;
   performing first data enhancement on the first sample tissue image using a first enhancement parameter to obtain a first image; inputting the first image into a first image encoder to obtain a first feature vector, the first feature vector being used as a contrast vector for contrast learning;
   performing second data enhancement on the first sample tissue image using a second enhancement parameter to obtain a second image, the second enhancement parameter being different from the first enhancement parameter; inputting the second image into a second image encoder to obtain a second feature vector, the second feature vector being used as an anchor vector for the contrast learning;
   clustering first feature vectors respectively corresponding to different first sample tissue images to obtain a plurality of first clustering centers, each of the plurality of first clustering centers being represented by a first feature vector; determining a first feature vector in the plurality of first clustering centers that has a maximum similarity value with the second feature vector to be a first positive sample vector; determining first feature vectors in the plurality of first feature vectors other than the first positive sample vector to be first negative sample vectors;
   generating a first subfunction based on the second feature vector and the first positive sample vector; generating a second subfunction based on the second feature vector and the first negative sample vectors; generating a first group loss function based on the first subfunction and the second subfunction; and
   training the first image encoder and the second image encoder simultaneously by using the first group loss function; and determining the trained second image encoder to be a final image encoder.

2. The method according to claim 1, wherein
   the inputting the first image into a first image encoder to obtain a first feature vector comprises:

   inputting the first image into the first image encoder to obtain a first intermediate feature vector; and inputting the first intermediate feature vector into a first multilayer perceptron, MLP, to obtain the first feature vector; and
   the inputting the second image into a second image encoder to obtain a second feature vector comprises:
   inputting the second image into the second image encoder to obtain a second intermediate feature vector; and inputting the second intermediate feature vector into a second MLP to obtain the second feature vector.

3. The method according to claim 1, wherein when the second feature vector is used as a contrast vector for the contrast learning, and the first feature vector is used as an anchor vector for the contrast learning, the method further comprises:

   clustering second feature vectors respectively corresponding to different first sample tissue images to obtain a plurality of second clustering centers;
   determining the second feature vector in the plurality of second clustering centers that has a maximum similarity value with the first feature vector to be a second positive sample vector;
   determining the second feature vectors in the plurality of second feature vectors other than the second positive sample vector to be second negative sample vectors;
   generating a third subfunction based on the first feature vector and the second positive sample vector; generating a fourth subfunction based on the first feature vector and the second negative sample vectors; generating a second group loss function based on the third subfunction and the fourth subfunction;
   training the first image encoder and the second image encoder simultaneously by using the second group loss function; and determining the trained first image encoder to be the final image encoder.

4. The method according to claim 1, wherein the method further comprises:
   updating parameters of a third image encoder by using pre-determined weights and model parameters shared between the first image encoder and the second image encoder, the third image encoder being different from the first image encoder and the second image encoder.

5. A whole slide image, WSI, search method, executable by a computer device, and the method comprising:

   acquiring a WSI, and cropping the WSI to obtain a plurality of tissue images;
   inputting the plurality of tissue images into a trained image encoder to obtain image feature vectors respectively corresponding to the plurality of tissue images;

clustering the image feature vectors to determine a plurality of key images from the plurality of tissue images;

for each of the plurality of key images, querying, based on an image feature vector of the respective key image, a database for a candidate image package, the candidate image package comprising at least one candidate tissue image;

determining a target image package from candidate image packages according to an attribute of the at least one candidate tissue image; and

determining at least one WSI, to which at least one candidate tissue image comprised in the target image package belongs, to be a search result.

6. The method according to claim 5, wherein the clustering the image feature vectors to determine a plurality of key images from the plurality of tissue images comprises:

clustering the image feature vectors to obtain a plurality of first class clusters; and

determining clustering centers respectively corresponding to the plurality of first class clusters to be image feature vectors respectively corresponding to the plurality of key images.

7. The method according to claim 6, wherein the method further comprises:

clustering, for an $n^{th}$ first class cluster in the plurality of first class clusters, position features of WSIs to which a plurality of tissue images corresponding to the $n^{th}$ first class cluster respectively belong, to obtain a plurality of second class clusters, n is a positive integer; and

the determining clustering centers respectively corresponding to the plurality of first class clusters to be image feature vectors respectively corresponding to the plurality of key images comprises:

determining, for the $n^{th}$ first class cluster in the plurality of first class clusters, clustering centers respectively corresponding to the plurality of second class clusters to be the image feature vectors respectively corresponding to the plurality of key images.

8. The method according to any one of claims 5 to 7, wherein the determining a target image package from candidate image packages according to an attribute of the at least one candidate tissue image comprises:

selecting, according to a quantity of diagnostic categories corresponding to candidate images in each of the candidate image packages, at least one candidate image package from the candidate image packages, as the target image package.

9. The method according to claim 8, wherein the selecting, according to a quantity of diagnostic categories corresponding to candidate images in each of the candidate image packages, at least one candidate image package from the candidate image packages, as the target image package comprises:

for each candidate image package, calculating an entropy value of the respective candidate image package, according to a cosine similarity between at least one candidate tissue image in the respective candidate image package and a key image corresponding to the respective candidate image package, a probability of occurrence of at least one diagnostic category in the database, and a diagnostic category of the at least one candidate tissue image, wherein the entropy value is used for measuring a quantity of diagnostic categories corresponding to the respective candidate image package; and

selecting the at least one candidate image package of which the entropy value is lower than an entropy threshold, as the target image package.

10. The method according to any one of claims 5 to 7, wherein the determining a target image package from candidate image packages according to an attribute of the at least one candidate tissue image comprises:

selecting the at least one candidate image package, according to a similarity between the at least one candidate tissue image and a key image corresponding to the at least one candidate image package, as the target image package.

11. The method according to claim 10, wherein the selecting the at least one candidate image package, according to a similarity between the at least one candidate tissue image and a key image corresponding to the at least one candidate image package, as the target image package comprises:

for each candidate image package,

arranging a plurality of candidate tissue images in the respective candidate image package according to a descending order of cosine similarities respectively between the plurality of candidate tissue images and a key image corresponding to the respective candidate image package;

acquiring first m candidate tissue images of the first candidate image package based on the arrangement, m is a positive integer;

determining an average value of the cosine similarities respectively corresponding to the first m candidate tissue images to be a first average value; and

determining a candidate image package in which an average value of cosine similarities of candidate tissue images comprised is greater than the first average value as the target image package.

12. An image encoder training apparatus, comprising:

an acquisition module configured to acquire a first sample tissue image;

a processing module configured to perform first data enhancement on the first sample tissue image using a first enhancement parameter to obtain a first image; input the first image into a first image encoder to obtain a first feature vector, the first feature vector being used as a contrast vector for contrast learning;

the processing module being further configured to perform second data enhancement on the first sample tissue image using a second enhancement parameter to obtain a second image, the second enhancement parameter being different from the first enhancement parameter; input the second image into a second image encoder to obtain a second feature vector, the second feature vector being used as an anchor vector for the contrast learning;

a clustering module configured to cluster first feature vectors respectively corresponding to different first sample tissue images to obtain a plurality of first clustering centers, each of the plurality of first clustering centers being represented by a first feature vector; determine a first feature vector in the plurality of first clustering centers that has a maximum similarity value with the second feature vector to be a first positive sample vector; determine first feature vectors in the plurality of first feature vectors other than the first positive sample vector to be first negative sample vectors;

a generation module configured to generate a first subfunction based on the second feature vector and the first positive sample vector in the plurality of first feature vectors; generate a second subfunction based on the second feature vector and the first negative sample vectors in the plurality of first feature vectors; and generate a first group loss function based on the first subfunction and the second subfunction; and

a training module configured to train the first image encoder and the second image encoder simultaneously by using the first group loss function; and determine the trained second image encoder to be an image encoder obtained by training.

13. A WSI search apparatus, comprising:

an acquisition module configured to acquire a WSI, and crop the WSI to obtain a plurality of tissue images;

a generation module configured to input the plurality of tissue images into a trained image encoder to obtain image feature vectors respectively corresponding to the plurality of tissue images;

a clustering module configured to cluster the image feature vectors to determine a plurality of key images from the plurality of tissue images;

a query module configured to for each of the plurality of key images, query, based on an image feature vector of the respective key image, a database for a candidate image package, the candidate image package comprising at least one candidate tissue image;

a selecting module configured to determine a target image package from candidate image packages according to an attribute of the at least one candidate tissue image; and

a determination module configured to determine at least one WSI, to which at least one candidate tissue image comprised in the target image package belongs, to be a search result.

14. A computer device, comprising: a processor and a memory, the memory storing a computer program, and the computer program being loaded and executed by the processor to implement the image encoder training method according to any one of claims 1 to 4 or the WSI search method according to any one of claims 5 to 11.

15. A computer-readable storage medium, storing a computer program, and the computer program being loaded and executed by a processor to implement the image encoder training method according to any one of claims 1 to 4 or the WSI search method according to any one of claims 5 to 11.

16. A computer program product, storing a computer program, and the computer program being loaded and executed by a processor to implement the image encoder training method according to any one of claims 1 to 4 or the WSI search method according to any one of claims 5 to 11.

FIG. 1

FIG. 2

FIG. 3

Acquire a first sample tissue image ⟶ 401

Perform first data enhancement on the first sample tissue image using a first enhancement parameter to obtain a first image; input the first image into a first image encoder to obtain a first feature vector ⟶ 402

Perform second data enhancement on the first sample tissue image using a second enhancement parameter to obtain a second image; and input the second image into a second image encoder to obtain a second feature vector ⟶ 403

Cluster first feature vectors respectively corresponding to different first sample tissue images to obtain a plurality of first clustering centers ⟶ 404

Determine a first feature vector in the plurality of first clustering centers that has a maximum similarity value with the second feature vector to be a first positive sample vector in a plurality of first feature vectors ⟶ 405

Determine the first feature vectors in the plurality of first feature vectors other than the first positive sample vector to be first negative sample vectors in the plurality of first feature vectors ⟶ 406

Generate a first subfunction based on the second feature vector and the first positive sample vector in the plurality of first feature vectors ⟶ 407

Generate a second subfunction based on the second feature vector and the first negative sample vectors in the plurality of first feature vectors ⟶ 408

Generate a first group loss function based on the first subfunction and the second subfunction ⟶ 409

Train the first image encoder and the second image encoder simultaneously by using the first group loss function; and determine the trained second image encoder to be a final image encoder obtained by training ⟶ 410

FIG. 4

FIG. 5

FIG. 6

412

Cluster second feature vectors respectively corresponding to different first sample tissue images to obtain a plurality of second clustering centers

413

Determine the second feature vector in the plurality of second clustering centers that has a maximum similarity value with the first feature vector to be a second positive sample vector in a plurality of second feature vectors

414

Determine the second feature vectors in the plurality of second feature vectors other than the second positive sample vector to be second negative sample vectors in the plurality of second feature vectors

415

Generate a third subfunction based on the first feature vector and the second positive sample vector in the plurality of second feature vectors

416

Generate a fourth subfunction based on the first feature vector and the second negative sample vectors in the plurality of second feature vectors

417

Generate a second group loss function based on the third subfunction and the fourth subfunction

418

Train the first image encoder and the second image encoder simultaneously by using the second group loss function; and determine the trained first image encoder to be a final image encoder obtained by training

FIG. 7

FIG. 8

Acquire a first sample tissue image and a plurality of second sample tissue images, the second sample tissue images being negative samples in contrast learning ~ 901

Perform third data enhancement on the first sample tissue image to obtain a third image; and input the third image into a third image encoder to obtain a third feature vector; where the third image is a positive sample in the contrast learning ~ 902

Perform first data enhancement on the first sample tissue image to obtain a first image; and input the first image into a first image encoder to obtain a fourth feature vector; where the first image is an anchor image in the contrast learning ~ 903

Input the plurality of second sample tissue images into the third image encoder to obtain feature vectors respectively corresponding to the plurality of second sample tissue images; cluster the plurality of feature vectors to obtain a plurality of clustering centers; and generate a plurality of weights based on similarity values between the plurality of clustering centers and the third feature vector ~ 904

Generate, based on the third feature vector and the fourth feature vector, a fifth subfunction used for representing an error between the anchor image and the positive sample ~ 905

Combine, based on the fourth feature vector and the plurality of feature vectors, the plurality of weights to generate a sixth subfunction used for representing an error between the anchor image and the negative sample ~ 906

Generate a first weight loss function based on the fifth subfunction and the sixth subfunction ~ 907

Train the first image encoder and the third image encoder by using the first weight loss function ~ 908

Update the third image encoder based on the first image encoder ~ 909

FIG. 9

Training framework based on weight loss function

FIG. 10

FIG. 11

910

Perform second data enhancement on the first sample tissue image to obtain a second image; and input the second image into a second image encoder to obtain a fifth feature vector

911

Generate, based on the third feature vector and the fifth feature vector, a seventh subfunction used for representing an error between the anchor image and the positive sample

912

Combine, based on the fifth feature vector and the plurality of feature vectors, the plurality of weights to generate an eighth subfunction used for representing an error between the anchor image and the negative sample

913

Generate a second weight loss function based on the seventh subfunction and the eighth subfunction

914

Train the second image encoder and the third image encoder based on the second weight loss function

FIG. 12

FIG. 13

WSI search process

1401

Acquire a WSI, and crop the WSI to obtain a plurality of tissue images

1402

Input the plurality of tissue images into a trained image encoder to obtain image feature vectors respectively corresponding to the plurality of tissue images

1403

Cluster the image feature vectors to determine a plurality of key images from the plurality of tissue images

1405

Determine a target image package from candidate image packages according to an attribute of the at least one candidate tissue image

1404

For each of the plurality of key images, query, based on an image feature vector of the respective key image, a database for a candidate image package

1406

Determine at least one WSI, to which at least one candidate tissue image comprised in the target image package belongs, to be a search result

FIG. 14

Feature-based
clustering
1506-1

Coordinate
-based
clustering
1506-2

Representative
small image
1506-3

Small
image
of WSI
1506-4

Construction architecture of database

Crop

WSI 1501

A plurality of
tissue images
1502

Image
encoder
1503

A plurality of
feature vectors of
the plurality of
tissue images 1505

...

Selection of
small image
1506

FIG. 15

Acquisition module — 1601

Processing module — 1602

Clustering module — 1603

Generation module — 1604

Training module — 1605

FIG. 16

```
┌─────────────────────────┐  ╱1701
│   Acquisition module    │
└─────────────────────────┘
             │
┌─────────────────────────┐  ╱1702
│   Generation module     │
└─────────────────────────┘
             │
┌─────────────────────────┐  ╱1703
│   Clustering module     │
└─────────────────────────┘
             │
┌─────────────────────────┐  ╱1704
│     Query module        │
└─────────────────────────┘
             │
┌─────────────────────────┐  ╱1705
│   Selecting module      │
└─────────────────────────┘
             │
┌─────────────────────────┐  ╱1706
│  Determination module   │
└─────────────────────────┘
```

FIG. 17

FIG. 18

# EP 4 443 396 A1

<table>
<tr><th colspan="3">INTERNATIONAL SEARCH REPORT</th><th>International application No.<br><br>**PCT/CN2023/092516**</th></tr>
</table>

**A. CLASSIFICATION OF SUBJECT MATTER**

G06V 10/70(2022.01)i; G06N 20/00(2019.01)i; G06V 10/762(2022.01)i; G06V 10/74(2022.01)i; G06V 10/46(2022.01)i; G06V 10/34(2022.01)i; G06F 16/535(2019.01)i; G06F 16/583(2019.01)i

According to International Patent Classification (IPC) or to both national classification and IPC

**B. FIELDS SEARCHED**

Minimum documentation searched (classification system followed by classification symbols)

IPC: G06V G06N G06F

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT; IEEE: 图像, 编码器, 训练, 样本, 组织, 增强, 特征向量, 对比学习, 锚向量, 聚类, 损失, image, encoder, training, sample, tissue, enhancement, feature vector, contrastive learning, anchor vector, clustering, loss

**C. DOCUMENTS CONSIDERED TO BE RELEVANT**

| Category* | Citation of document, with indication, where appropriate, of the relevant passages | Relevant to claim No. |
|---|---|---|
| PX | CN 115115856 A (TENCENT TECHNOLOGY (SHENZHEN) CO., LTD.) 27 September 2022 (2022-09-27)<br>claims 1-16, and description, paragraphs [0005]-[0416] | 1-16 |
| A | CN 113628197 A (HARBIN UNIVERSITY OF SCIENCE AND TECHNOLOGY) 09 November 2021 (2021-11-09)<br>description, paragraphs [0009]-[0138] | 1-16 |
| A | CN 106446004 A (BEIHANG UNIVERSITY) 22 February 2017 (2017-02-22)<br>entire document | 1-16 |
| A | CN 113822325 A (TENCENT TECHNOLOGY (SHENZHEN) CO., LTD.) 21 December 2021 (2021-12-21)<br>entire document | 1-16 |
| A | CN 113657406 A (BEIJING KUANGSHI TECHNOLOGY CO., LTD. et al.) 16 November 2021 (2021-11-16)<br>entire document | 1-16 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 June 2023** | **15 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

45

INTERNATIONAL SEARCH REPORT
Information on patent family members

International application No.

**PCT/CN2023/092516**

| Patent document cited in search report | | | Publication date (day/month/year) | Patent family member(s) | | | Publication date (day/month/year) |
|---|---|---|---|---|---|---|---|
| CN | 115115856 | A | 27 September 2022 | None | | | |
| CN | 113628197 | A | 09 November 2021 | None | | | |
| CN | 106446004 | A | 22 February 2017 | CN | 106446004 | B | 17 January 2020 |
| CN | 113822325 | A | 21 December 2021 | WO | 2023000872 | A1 | 26 January 2023 |
| CN | 113657406 | A | 16 November 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210531185